# EUROPEAN PATENT SPECIFICATION

(11) **EP 3 862 484 B1**
(45) Date of publication and mention of the grant of the patent: **15.05.2024**
(21) Application number: 19881717.3
(22) Date of filing: 07.11.2019
(51) Int. Cl.: D21C 5/02, D21C 9/00, D21H 11/14, D21H 11/18, B09B 3/00, B09B 5/00, B29B 17/00, B29B 17/02, B29L 31/48

(54) **METHOD FOR PRODUCING RECYCLED PULP FIBERS, RECYCLED PULP FIBERS, AND USE FOR OZONE**
VERFAHREN ZUR HERSTELLUNG VON RECYCELTEN ZELLSTOFFFASERN, RECYCELTE ZELLSTOFFFASERN UND VERWENDUNG FÜR OZON
PROCÉDÉ DE PRODUCTION DE FIBRES DE PÂTE RECYCLÉE, FIBRES DE PÂTE RECYCLÉE ET UTILISATION POUR OZONE

(30) Priority: 09.11.2018 JP 2018211713; 28.12.2018 JP 2018248575; 31.12.2018 JP 2018248995
(43) Date of publication of application: 11.08.2021
(73) Proprietor: Unicharm Corporation, Shikokuchuo-shi, Ehime 799-0111 (JP)
(72) Inventor: KONISHI, Takayoshi, Kanonji-shi, Kagawa 769-1602 (JP); BANDOU, Takeshi, Kanonji-shi, Kagawa 769-1602 (JP); YAMAKI, Kouichi, Kanonji-shi, Kagawa 769-1602 (JP); OHASHI, Naoto, Kanonji-shi, Kagawa 769-1602 (JP)
(74) Representative: Dolleymores
(86) International application number: PCT/JP2019/043759
(87) International publication number: WO 2020/096013

(56) References cited:
- EP-A1- 3 617 401
- EP-A1- 3 626 882
- WO-A1-2018/025501
- JP-A- 2003 523 484
- JP-A- 2016 000 881
- JP-A- 2016 198 742
- US-A- 3 932 209
- US-A1- 2015 225 901

## Description

### FIELD

The present disclosure relates to a method of producing a recycled pulp fiber from a pulp fiber to be treated, a recycled pulp fiber derived from a used sanitary product containing a pulp fiber, and a use of ozone for reducing a hemicellulose content of a recycled pulp fiber.

### BACKGROUND

There are studies of a technology for recycling a used sanitary product such as disposable diapers. For example, Patent Literature 1 discloses a method for producing a recycled pulp fiber mainly reusable as a sanitary product. Specifically, Patent Literature 1 discloses a method for collecting a pulp fiber from a used sanitary product containing a pulp fiber and a super absorbent polymer to produce a recycled pulp reusable as a sanitary product, the method including a step of decomposing the used sanitary product into the pulp fiber and other materials by exerting a physical force to the used sanitary product in an aqueous solution containing polyvalent metal ions or an acidic aqueous solution having pH of 2.5 or less, a step of separating the pulp fiber from a mixture of the pulp fiber and the other materials generated in the decomposition step, and a step of treating the separated pulp fiber in an ozone-containing aqueous solution having pH of 2.5 or less.

In Patent Literature 1, a reason for treating the pulp fiber with the ozone-containing aqueous solution is that a considerable amount of the super absorbent polymer remains in the separated pulp fiber and it is removed from the pulp fiber by oxidatively decomposing and solubilizing the super absorbent polymer. Patent Literature 1 discloses, as a method for treating the pulp fiber with the ozone-containing aqueous solution, a method of putting the ozone-containing aqueous solution in a treatment tank and putting the separated pulp fiber in the ozone-containing aqueous solution. In the method described above, it is preferable to appropriately stir the ozone-containing aqueous solution to generate a water flow during the treatment, and an ozone gas may be blown into the aqueous solution contained in a container, and a rise of ozone gas bubbles may generate the water flow in the ozone-containing aqueous solution.

### [CITATION LIST]

### [PATENT LITERATURE]

Patent Literature 1: Japanese Unexamined Patent Application Publication No.2016-881
US 3932209 A discloses dry crosslinked, fibrous cellulosic absorbent materials having low hemicellulose content and low knot content.
US 2015/225901 A1 discloses a method of producing dissolving pulp from a recycled fibrous feedstock.
EP 3626882 A1 is prior art under Art. 54(3) EPC and discloses a method for producing pulp fibers for cellulose nanofiberization from pulp fibers of used hygiene products.
EP 3617401 A1 is prior art under Art. 54(3) EPC and discloses a method of manufacturing pulp fibers for saccharification from pulp fibers of used hygiene products.

### SUMMARY

### [TECHNICAL PROBLEM]

Patent Literature 1 discloses that a "recycled pulp fiber" is reused as a "pulp fiber" itself, but Patent Literature 1 does not disclose that the recycled pulp fiber is used as a raw material. In addition, Patent Literature 1 discloses that the "recycled pulp fiber" is reused as ordinary "pulp fiber", but Patent Literature 1 does not disclose that it is used as a pulp fiber for a culture medium as a culture medium for cellulase-producing microorganism.

For the sanitary product, a pulp fiber is often used for an absorbent body and many of the pulp fibers are derived from coniferous trees. It is known that the pulp fiber derived from coniferous trees contains approximately 10 to approximately 25mass% of hemicellulose, in addition to approximately 50 to approximately 60mass% of cellulose. Hemicellulose is abundant in the cell wall of plants. In a case where the pulp fiber is used as a cellulose raw material, for example, the hemicellulose present in the pulp fiber remains in cellulose collected from the pulp fiber, and thus in a cellulose-derived product, and the remaining hemicellulose may disturb functions of the cellulose-derived product. In addition, in a case where the pulp fiber is used as a cellulose raw material, for example, when the hemicellulose present in the pulp fiber disturbs the functions of a culture medium for cellulase-producing microorganism, for example, the cellulase productivity of the cellulase-producing microorganism may be lowered.

In the field of sanitary products, the pulp fiber is used for an absorbent body and the like, and hemicellulose contained in the pulp fiber is generally not removed from the pulp fiber, from viewpoints that the hemicellulose (i) does not easily disturb the function of the sanitary product (for example, absorbing properties), (ii) gives elasticity to the pulp fiber, and (iii) contributes to a yield of the pulp fiber to be produced. Therefore, an object of the present disclosure is to provide a method of producing a recycled pulp fiber having a low hemicellulose content and being useful for various uses.

### [SOLUTION TO PROBLEM]

The inventors have found a method, as claimed in claim 1, of producing a recycled pulp fiber from a pulp fiber to be treated. The present invention also relates to products and uses as set out in the claims. Preferred but optional features are set out in the dependent claims.

### [ADVANTAGEOUS EFFECT OF THE INVENTION]

The method of producing a recycled pulp fiber of the present disclosure can produce a recycled pulp fiber having a low hemicellulose content and useful for various uses.

### BRIEF DESCRIPTION OF DRAWINGS

Fig. 1 is a flow chart showing an embodiment according to a method of the present disclosure.
Fig. 2 is a schematic view showing a configuration example of an apparatus of an ozone treatment step of Fig. 1.
Fig. 3 is a schematic view showing another configuration example of the apparatus of the ozone treatment step of Fig. 1.
Fig. 4 is a schematic view showing still another configuration example of the apparatus of the ozone treatment step of Fig. 1.
Fig. 5 is a flow chart showing an embodiment according to the method of the present disclosure.

### DESCRIPTION OF EMBODIMENTS

The present disclosure specifically relates to the following aspects.

### [Aspect 1]

A method of producing a recycled pulp fiber from a pulp fiber to be treated, the method including a recycled pulp fiber forming step of forming the recycled pulp fiber having a hemicellulose content of less than 8.0mass% from the pulp fiber to be treated, by supplying an ozone-containing gas to a treatment tank containing a treatment liquid containing a pulp fiber-containing material containing the pulp fiber to be treated.

In the production method described above, a recycled pulp fiber having a predetermined hemicellulose content, that is, a recycled pulp fiber suitable as a cellulose raw material can be produced from the pulp fiber to be treated. In addition, in the production method described above, a pulp fiber for a culture medium having a hemicellulose content of less than 8.0mass% can be produced from the pulp fibers to be treated. Accordingly, the production method described above can produce a pulp fiber for a culture medium having excellent cellulase productivity using cellulase-producing microorganism.

In the recycled pulp fiber forming step, the recycled pulp fiber is formed by bringing the ozone-containing gas into contact with the pulp fiber-containing material so that a CT value, which is a product of an ozone concentration and a treatment time, is 8,000 to 11,000 ppm·min.

In the production method described above, in the recycled pulp fiber forming step, the recycled pulp fiber is formed by bringing the ozone-containing gas into contact with the pulp fiber-containing material under predetermined conditions. Accordingly, in the production method described above, a recycled pulp fiber having a predetermined hemicellulose content, a desired lignin content, and the like, that is, a recycled pulp fiber suitable as a cellulose raw material can be produced from the pulp fiber included in the used sanitary product. In addition, in the production method described above, the pulp fiber for a culture medium having a predetermined lignin content can be easily produced from the pulp fiber.

### [Aspect 2]

The method according to aspect 1, wherein the recycled pulp fiber has a lignin content of 0.10mass% or less.

It is known that pulp fiber contains lignin, in addition to cellulose. For example, it is known that the coniferous trees, which are often used in sanitary products, contain 20mass% to 30mass% of lignin. In addition, in a case where the pulp fiber is used as a cellulose raw material, for example, the lignin present in the pulp fiber remains in cellulose collected from the pulp fiber, and thus in a cellulose-derived product, and the remaining lignin may disturb functions of the cellulose-derived product. In the production method described above, a recycled pulp fiber having a predetermined lignin content, that is, a recycled pulp fiber suitable as a cellulose raw material can be produced from the pulp fiber included in the used sanitary product. In addition, in a case where the pulp fiber is used as a culture medium for cellulase-producing microorganism, when the lignin present in the pulp fiber disturbs the functions of a culture medium for cellulase-producing microorganism, for example, the cellulase productivity of the cellulase-producing microorganism may be lowered. In the production method described above, pulp fibers for a culture medium having a lignin content of 0.10mass% or less can be produced from pulp fibers contained in a used sanitary product. Accordingly, the production method described above can produce a pulp fiber for a culture medium having excellent cellulase productivity using cellulase-producing microorganism.

### [Aspect 3]

The method according to any one of the aspects 1 to 2, further comprising a provision step of providing the treatment tank including a pulp fiber-containing material supply port, a treatment liquid discharge port, and an ozone-containing gas supply port disposed at a lower position of the treatment tank, a pulp fiber-containing material supply step of supplying the pulp fiber-containing material to the treatment tank from the pulp fiber-containing material supply port, an ozone-containing gas supply step of supplying the ozone-containing gas to the treatment liquid in the treatment tank from the ozone-containing gas supply port, the recycled pulp fiber forming step of forming the recycled pulp fiber from the pulp fiber to be treated, by bringing the pulp fiber-containing material into contact with the ozone-containing gas while raising the ozone-containing gas in the treatment tank, and a treatment liquid discharge step of discharging the treatment liquid containing the recycled pulp fiber from the treatment liquid discharge port.

Since the hemicellulose has a lower specific gravity than cellulose, a pulp fiber having a relatively low hemicellulose content (pulp fiber having a relatively high cellulose content) tends to have a relatively high specific gravity than a pulp fiber having a relatively high hemicellulose content (pulp fiber having a relatively low cellulose content). Meanwhile, in a solution, the ozone-containing gas rises while consuming ozone, and accordingly, the ozone-containing gas existing at the lower position has a higher ozone content than the ozone-containing gas existing at an upper position (that is, it tends to be fresh).

The production method described above includes the predetermined provision step, pulp fiber-containing material supply step, ozone-containing gas supply step, recycled pulp fiber forming step, and treatment liquid discharge step. In the recycled pulp fiber forming step, the pulp fiber-containing material and the ozone-containing gas are brought into contact with each other while raising the ozone-containing gas.

In the production method described above, the pulp fiber having a relatively low hemicellulose content (pulp fiber having a relatively high cellulose content) has relatively high sedimentation properties (or relatively low floating properties) than the pulp fiber having a relatively high hemicellulose content (pulp fiber having a relatively low cellulose content), and the fresh ozone-containing gas comes into contact with the pulp fiber having a relatively low hemicellulose content to easily further decompose the hemicellulose contained therein. Accordingly, the production method described above can produce a recycled pulp fiber that can be suitably used as a cellulose raw material. In addition, the production method described above can produce a pulp fiber for a culture medium having excellent cellulase productivity using cellulase-producing microorganism.

In general, the higher the lignin content of pulp fiber, the lower the specific gravity tends to be. Therefore, in the production method described above, the pulp fiber having a relatively low lignin content has a relatively high sedimentation properties than the pulp fiber having a relatively high lignin content, and accordingly, the fresher ozone-containing gas can come into contact with the pulp fiber having a relatively low lignin content to further decompose the lignin contained therein.

The ozone-containing gas supply port means a lower position of the treatment tank, specifically, a range of preferably 30%, more preferably 20%, and even more preferably 10% of a height of the treatment tank from a bottom of the treatment tank. In addition, the pulp fiber-containing material supply port may be disposed at a lower side or an upper side of the ozone-containing gas supply port, and the treatment liquid discharge port may be disposed at a lower side or an upper side of the ozone-containing gas supply port.

The production method according to the aspect 3 includes both so-called continuous production method and batch production method. In addition, the "rising the ozone-containing gas" means that the ozone-containing gas is raising as a whole, and includes the raising of the ozone-containing gas as a whole in a vertical direction while being stirred in a horizontal direction, when the treatment liquid in the treatment tank is stirred.

### [Aspect 4]

The method according to the aspect 3, wherein the pulp fiber-containing material contains the pulp fiber to be treated and a super absorbent polymer, which are derived from a used sanitary product, the pulp fiber-containing material in the pulp fiber-containing material supply step and the recycled pulp fiber forming step further contains the super absorbent polymer, and at least a part of the super absorbent polymer is dissolved in the treatment liquid in the recycled pulp fiber forming step.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure.

In the production method described above, the recycled pulp fiber forming step, the pulp fiber-containing material and the ozone-containing gas are brought into contact with each other while raising the ozone-containing gas. In the free super absorbent polymer, the free pulp fiber, and the coupling structure, the free super absorbent polymers and coupling structure having a relatively low buoyancy tends to have higher sedimentation properties than the free pulp fiber having a relatively high buoyancy. Meanwhile, the ozone-containing gas rises while consuming ozone and treating the pulp fiber-containing material, and accordingly, the ozone-containing gas existing at the lower position has a higher ozone content than the ozone-containing gas existing at an upper position (that is, it tends to be fresh).

Therefore, in the production method described above, the free super absorbent polymer and the super absorbent polymer in the coupling structure having a relatively high sedimentation properties are accurately oxidatively decomposed by the fresher ozone-containing gas to separate the pulp fiber configured the coupling structure, and the free pulp fiber having a relatively low sedimentation properties and relatively taking a period of time until arriving the treatment liquid discharge port can be treated by the ozone-containing gas by taking time to decompose hemicellulose contained in the free pulp fiber.

In addition, the pulp fiber having a relatively low hemicellulose content (pulp fiber having a relatively high cellulose content) has higher sedimentation properties than the pulp fiber having a relatively high hemicellulose content (pulp fiber having a relatively low cellulose content), and in the production method described above, the fresher ozone-containing gas comes into contact with the pulp fiber having a relatively low hemicellulose content to further decompose the hemicellulose contained therein. Accordingly, the production method described above can produce a recycled pulp fiber that can be suitably used as a cellulose raw material. In addition, the production method described above can produce a pulp fiber for a culture medium having excellent cellulase productivity using cellulase-producing microorganism.

### [Aspect 5]

The method according to the aspect 4, wherein the treatment liquid is acidic, weakly acidic, or neutral. In the production method described above, the treatment liquid is acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). Accordingly, the super absorbent polymer to be treated can be inactivated by acid, or if the super absorbent polymer to be treated is already inactivated, the super absorbent polymer can be continuously maintained in the inactivated state. As a result, even when the super absorbent polymer and the pulp fiber form the coupling structure, the ozone in the ozone-containing gas can remove the super absorbent polymer constituting the coupling structure, and the ozone in the ozone-containing gas can act on the pulp fiber constituting the coupling structure to decrease the hemicellulose content of the pulp fiber. Accordingly, the production method described above can produce a recycled pulp fiber that can be suitably used as a cellulose raw material. In addition, the production method described above can produce a pulp fiber for a culture medium having excellent cellulase productivity using cellulase-producing microorganism.

### [Aspect 6]

The method according to the aspect 4 or 5, further comprising an inactivation step of inactivating the super absorbent polymer with an acid before the pulp fiber-containing material supply step.

Since the production method described above further includes the predetermined inactivation step, even when the super absorbent polymer and the pulp fiber form the coupling structure, the ozone in the ozone-containing gas can remove the super absorbent polymer constituting the coupling structure immediately after the pulp fiber-containing material containing the super absorbent polymer and the pulp fiber derived from the used sanitary product is supplied to the treatment tank, and the ozone in the ozone-containing gas can act on the pulp fiber constituting the coupling structure to decrease the hemicellulose content of the pulp fiber. Accordingly, the production method described above can produce a recycled pulp fiber that can be suitably used as a cellulose raw material. In addition, the production method described above can produce a pulp fiber for a culture medium having excellent cellulase productivity using cellulase-producing microorganism.

### [Aspect 7]

The method according to the aspect 6, wherein the acid is an acid capable of forming a complex with a metal ion contained in excrement.

In the production method described above, since the acid is an acid capable of forming a complex with a metal ion contained in excrement, the produced recycled pulp fiber is less likely to contain the metal ions. Accordingly, from recycled pulp fiber, in the step of using the recycled pulp fiber, metal ions and their precipitates are less likely to damage the equipment used in the step of using the recycled pulp fiber, and are less likely to disturb the miniaturization of the recycled pulp fiber. In addition, from the pulp fiber for a culture medium, in the step of using the pulp fiber for a culture medium, the metal ions and their precipitates are less likely to damage the equipment used in the step of using the pulp fiber for a culture medium.

### [Aspect 8]

The method according to any one of the aspects 1 to 7, whereinthe recycled pulp fiber is a raw material for a cellulose nanofiber, a viscose rayon, a cellulose derivative, a bioethanol, a molding material, or a processed paper product, or a pulp fiber for a culture medium as a culture medium for cellulase-producing microorganism, wherein the cellulose derivative is selected from a group consisting of a semi-synthetic cellulose fiber, carboxymethyl cellulose, hydroxyethyl cellulose and hydroxypropyl cellulose.

The production method described above includes a case where the recycled pulp fiber is a predetermined raw material. In that case, the production method described above can produce the recycled pulp fiber that can be suitably used as a predetermined cellulose raw material. In addition, the production method described above includes a case where the recycled pulp fiber is a pulp fiber for a culture medium as a culture medium for cellulase-producing microorganism. In this case, the production method described above can produce the recycled pulp fiber that can be suitably used as a pulp fiber for a culture medium as a culture medium for cellulase-producing microorganism.

### [Aspect 9]

The method according to the aspect 8, wherein the recycled pulp fiber is the pulp fiber for a culture medium, and bacteria are not detected in the pulp fiber for a culture medium by a pour culture method and/or a plate culture method. In the production method described above, the bacteria are not detected in the pulp fibers for a culture medium by the pour culture method and/or the plate culture method, and accordingly, when the pulp fiber for a culture medium are used as the culture medium for cellulase-producing microorganism, the production of cellulase by the cellulase-producing microorganism is less likely to be disturbed.

### [Aspect 10]

The method according to the aspect 8 or 9, wherein the recycled pulp fiber is the pulp fiber for a culture medium, and the method further comprises a cellulase generation step of generating cellulase using the pulp fiber for a culture medium after the recycled pulp fiber forming step. In the production method described above, cellulase can be efficiently produced using the pulp fiber for a culture medium.

### [Aspect 11]

The method according to any one of the aspects 1 to 8, further comprising a cellulose use step of forming a cellulose nanofiber, a viscose rayon, a cellulose derivative, a bioethanol, a molding material, or a processed paper product from the recycled pulp fiber.

The production method described above includes the predetermined cellulose use step, and a predetermined cellulose-derived product (cellulose nanofiber, viscose rayon, cellulose derivative, bioethanol, molding material, or processed paper product) can be efficiently produced.

### [Aspect 12]

A recycled pulp fiber derived from a used sanitary product containing a pulp fiber, wherein the recycled pulp fiber has a hemicellulose content of less than 8.0mass%. The recycled pulp fiber is obtained according to the method of any one of aspects 1 to 11.

Since the recycled pulp fiber has the predetermined hemicellulose content, it is suitable as a cellulose raw material. In addition, since the recycled pulp fiber has the predetermined hemicellulose content, the productivity of cellulase using cellulase-producing microorganism is excellent.

In the recycled pulp fiber according to the aspect 12, the recycled pulp fiber has a lignin content of less than 0.10mass%. Since the recycled pulp fiber has the predetermined lignin content, it is suitable as a raw material for cellulose. In addition, since the recycled pulp fiber has the predetermined lignin content, the productivity of cellulase using cellulase-producing microorganism is excellent.

### [Aspect 13]

The recycled pulp fiber according to the aspect 12, wherein the recycled pulp fiber is a raw material for a cellulose nanofiber, a viscose rayon, a cellulose derivative, a bioethanol, a molding material, or a processed paper product, or a pulp fiber for a culture medium as a culture medium for cellulase-producing microorganism. The recycled pulp fiber is suitable as a predetermined cellulose raw material.

### [Aspect 14]

The recycled pulp fiber according to the aspect 13, wherein the recycled pulp fiber is the pulp fiber for a culture medium, and bacteria are not detected in the pulp fiber for a culture medium by a pour culture method and/or a plate culture method.

The bacteria are not detected in the pulp fibers for a culture medium by the pour culture method and/or the plate culture method, and accordingly, when the pulp fiber for a culture medium are used as the culture medium for cellulase-producing microorganism, the production of cellulase by the cellulase-producing microorganism is less likely to be disturbed.

### [Aspect 15]

The recycled pulp fiber according to the aspect 13 or 14, wherein the recycled pulp fiber is the pulp fiber for a culture medium, and the pulp fiber for a culture medium contains an ash content of 0.65mass% or less. Since the pulp fiber for a culture medium has the predetermined ash content, it is difficult for the ash content to be mixed into the cellulase produced using the culture medium for cellulase-producing microorganism containing the pulp fiber for a culture medium, and it is difficult to disturb the saccharification of cellulose using the cellulase.

### [Aspect 16]

A use of the recycled pulp fiber according to any one of the aspects 12 to 13 as a raw material for a cellulose nanofiber, a viscose rayon, a cellulose derivative, a bioethanol, a molding material, or a processed paper product. The cellulose nanofiber, the viscose rayon, the cellulose derivative, the molding material, or the processed paper product has a high cellulose content. The bioethanol has a high ethanol content.

### [Aspect 17]

A use of ozone for reducing a hemicellulose content of a recycled pulp fiber derived from a used sanitary product containing a pulp fiber. The use described above can reduce the hemicellulose content in recycled pulp fiber using ozone.

### [Aspect 18]

The use according to the aspect 19, wherein the recycled pulp fiber has a hemicellulose content of less than 8.0mass%. The use described above can form a recycled pulp fiber suitable as a cellulose raw material.

Hereinafter, a method of producing a recycled pulp fiber from a pulp fiber to be treated (hereinafter, may be simply referred to as a "method of producing a recycled pulp fiber") will be described. The pulp fiber to be treated is not particularly limited as long as it is a pulp fiber, and examples thereof include an unused pulp fiber (for example, virgin pulp fiber), a used pulp fiber (for example, pulp fiber derived from a used sanitary product), and the like.

The used sanitary product described above is a sanitary product used by a user and includes a sanitary product in a state where the user's liquid excrement is absorbed, a sanitary product which is used but does not absorb excrement, a sanitary product which is not used and discarded, and the like.

In the present specification, a term "to be treated" of the pulp fiber to be treated is a modifier for distinguishing a pulp fiber before the treatment from a recycled pulp fiber after the treatment, does not have other intentions. In addition, in the present specification, as the "pulp fiber to be treated", an embodiment of a used pulp fiber, particularly, a pulp fiber derived from the used sanitary product, is mentioned, in which the "pulp fiber to be treated" may be simply referred to as a "pulp fiber".

First, a configuration example of the sanitary product will be described. The sanitary product includes, for example, a liquid-permeable sheet, a liquid-impermeable sheet, and an absorbent body disposed between the liquid-permeable sheet and the liquid-impermeable sheet. Examples of sanitary product include a paper diaper, a urine absorbing pad, a sanitary napkin, a bed sheet, and a pet sheet.

Examples of a constituent member of the liquid-permeable sheet include a nonwoven fabric or a film, and specific examples thereof include a liquid-permeable nonwoven fabric, a synthetic resin film having liquid-permeable holes, and a composite sheet thereof. Examples of a constituent member of the liquid-impermeable sheet include a nonwoven fabric or a film, and specific examples thereof include a liquid-impermeable nonwoven fabric, a liquid-impermeable synthetic resin film, and a composite sheet thereof.

Examples of a constituent members of the absorbent body include an absorbent core (for example, a pulp fiber and a super absorbent polymer) and a core wrap. The pulp fiber is not particularly limited as long as it can be used as a sanitary product, and examples thereof include a cellulosic fiber. Examples of the cellulosic fiber include a wood pulp (for example, coniferous pulp or hardwood pulp), a crosslinked pulp, and a non-wood pulp. The super absorbent polymer (SAP) is not particularly limited as long as it can be used as a sanitary product, and examples thereof include polyacrylate-based, polysulfonate-based, and maleic anhydride-based polymers.

One surface and the other surface of the absorbent body are bonded to the liquid-permeable sheet and the liquid-impermeable sheet, respectively, via an adhesive. In a plan view, a portion (peripheral portion) of the liquid-permeable sheet which extends to an outer side of the absorbent body so as to surround the absorbent body is bonded to a portion (peripheral portion) of the liquid-impermeable sheet which extends to an outer side of the absorbent body to surround the absorbent body via an adhesive. Accordingly, the absorbent body is wrapped inside the bonded body of the liquid-permeable sheet and the liquid-impermeable sheet. The adhesive is not particularly limited as long as it can be used as a sanitary product and a bonding force is lowered by softening or the like due to hot water which will be described later, and examples thereof include a hot melt type adhesive. Examples of the hot melt type adhesive include a pressure-sensitive adhesive or a heat-sensitive adhesive of a rubber-based entity such as styrene-ethylene-butadiene-styrene, styrenebutadiene-styrene, and styrene-isoprene-styrene, or an olefin-based entity such as polyethylene.

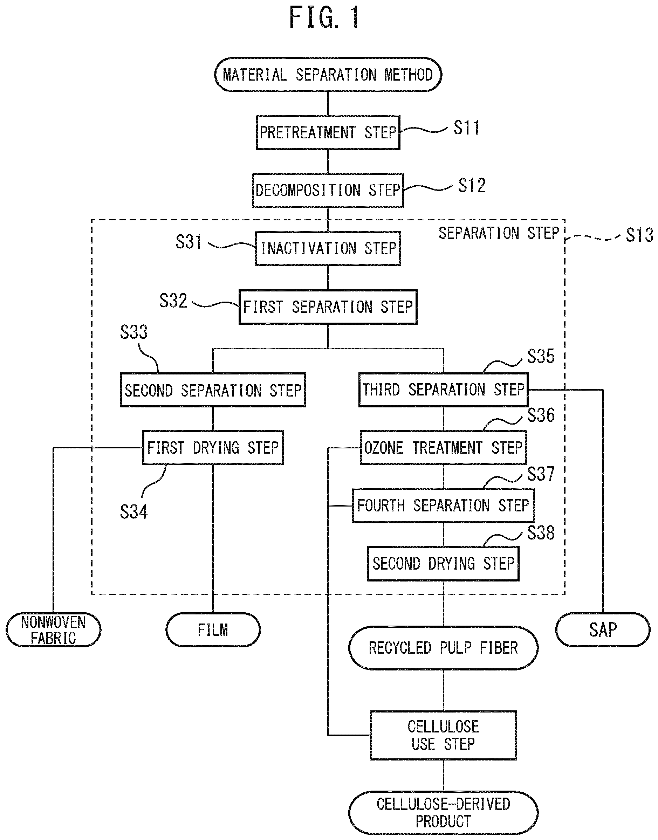

Fig. 1 is a flow chart showing a material separation method of separating the used sanitary product into constituent materials. This material separation method is a method of separating the used sanitary product into a film, a nonwoven fabric, a pulp fiber, and a super absorbent polymer. This material separation method includes a pretreatment step S11, a decomposition step S12, and a separation step S13. In the pretreatment step S11, the used sanitary product is swollen with water. In the decomposition step S12, a physical impact is applied to the swollen used sanitary product, and the used sanitary product is decomposed into a film, a nonwoven fabric, and a core wrap, and absorbent core (for example, pulp fiber and super absorbent polymer). In the separation step S13, the film, the nonwoven fabric, the pulp fiber, and the super absorbent polymer are separated.

The method of producing the recycled pulp fiber of the present disclosure is included in the separation step S 13 of this material separation method. If a mixture of the pulp fibers and the super absorbent polymer (pulp fiber-containing material) has been obtained in advance by any method, it is not necessary to perform the steps earlier than the method of producing the recycled pulp fiber in the pretreatment step S11, the decomposition step S12, and the separation step S13. Hereinafter, each step will be described.

In the pretreatment step S11, a plurality of used sanitary products absorb water to be swollen, in a state where the sanitary products are collected from outside, that is, in a rolled state or a folded state without being destructed or cut, without inactivation of the super absorbent polymer of the absorbent body. In the present embodiment, the used sanitary products are made to absorb hot water and swell, or made to absorb water to be expanded and then the absorbed water is heated to have hot water. The hot water refers to water having a temperature higher than room temperature (20°C ± 15°C (5°C to 35°C): JISZ8703).

Normally, an amount of liquid excrement actually absorbed by the used sanitary product is extremely small, compared to a maximum absorption amount that sanitary products can absorb (for example, approximately 10 to 20mass% of the maximum absorption amount). In the present embodiment, in the pretreatment step S11, by immersing the used sanitary product in hot water, an amount of water close to the maximum absorption amount of the used sanitary product (for example, 80mass% or more of the maximum absorption amount) is absorbed. Alternatively, the used sanitary product is immersed in water at room temperature to absorb water to an amount close to the maximum absorption amount of the used sanitary product, and then the entire used sanitary product is heated to a temperature of hot water. Accordingly, the used sanitary product can be brought into an extremely expanded state with hot water or water at room temperature (hereinafter, also simply referred to as "hot water"). As a result, in the used sanitary product, an extremely high internal pressure is generated. In addition, an object of turning the water into hot water is mainly to weaken the adhesive strength of the adhesive as will be described later.

Here, in a case where the used sanitary product are initially immersed in hot water when it is rolled or folded with the liquid-impermeable sheet on the outside (the liquid-permeable sheet is hidden inside), and accordingly, the absorbent body of the used sanitary product absorbs hot water in the hot water and expands. Due to that, the internal pressure of the used sanitary product increases, and a force to open the used sanitary product outward is exerted to the used sanitary product, so that the used sanitary product in the rolled or folded state is opened outward and is in a substantially flat state. That is, the used sanitary product can be unfolded to be flattened in hot water. At this time, since the absorbent body of the used sanitary product absorbs a large amount of hot water and expands extremely, the surface thereof, that is, any portion of the liquid-permeable sheet and the liquid-impermeable sheet wrapping the absorbent body is likely to be easily burst. That is, in the pretreatment step S11, any surface of the used sanitary product can be in a state where it is likely to be torn and cut. In a case where the used sanitary product is in an unfolded state to be flattened from the beginning, any portion of the surface is likely to be easily burst in that state. This state cannot occur, in a case where the used sanitary product is broken or the like.

In addition, the used sanitary product is immersed in hot water and/or absorbs the hot water to soften an adhesive (for example, hot-melt adhesive) used for bonding constituent members to each other by the heat of the hot water, thereby reducing a bonding force of the adhesive. For example, the adhesive for bonding the peripheral portion of the liquid-permeable sheet and the peripheral portion of the liquid-impermeable sheet to each other can be softened by the heat of hot water to reduce the bonding force of the adhesive. In addition, the adhesive for bonding the liquid-permeable sheet and the absorbent body and the adhesive for bonding the liquid-impermeable sheet and the absorbent body can be softened by the heat of hot water to reduce the bonding force of the adhesives.

As described above, in the pretreatment step S11, the expansion of the absorbent body of the used sanitary product can generate a state where any portion of the surface of the used sanitary product is likely to burst, and a state where the bonding force of the adhesive is reduced. By setting the used sanitary product in such a state, the used sanitary product can be reliably decomposed in the decomposition step which will be described later.

A temperature of the hot water in the pretreatment step S 11 is not particularly limited as long as the adhesive of the used sanitary product can be softened, and for example, it is 60°C or higher and preferably 70°C or higher and 98°C or lower. By setting the temperature of the hot water to 70°C or higher, the adhesive for bonding the constituent members to each other can be further softened by the heat of the hot water, and the bonding force of the adhesive can be further reduced. By setting the temperature of the hot water to 98°C or lower, the hot water certainly exists as a liquid, and accordingly, the used sanitary product can more reliably absorb the hot water. Due to the expansion of the absorbent body and the heat of the hot water, it is possible to more reliably generate a state in which the surface of the used sanitary product is likely to burst and a state in which the bonding force of the adhesive is reduced. For temperature measurement, a temperature of hot water in which the used sanitary product is immersed is measured, or a temperature of an inner part of 5 mm from the surface of the used sanitary product which have absorbed water to an amount close to the maximum absorption amount (tip of a temperature sensor is inserted) is measured.

In addition, the sterilization of constituent materials is extremely important in the reuse of the used sanitary product. It is preferable that the temperature of the hot water is 70°C or higher, because it is possible to exhibit an effect of sterilizing (disinfecting) the used sanitary product.

The treatment time in the pretreatment step S11, that is, the time for immersing the used sanitary product in hot water is not particularly limited as long as the absorbent body of the used sanitary product can expand, and is, for example, 2 to 60 minutes and preferably 4 to 30 minutes. In a case where the time is extremely short, the absorbent body cannot expand sufficiently, and in a case where the time is extremely long, the time is wasted and the treatment cost increases unnecessarily.

The amount of hot water absorbed by the absorbent body in the pretreatment step S11 is not particularly limited as long as the absorbent body can expand to the extent that the used sanitary product can be decomposed in the decomposition step which will be described later, and is, for example, 80mass% or more of the maximum absorption amount of the used sanitary product and is preferably 90mass% or more. Accordingly, the used sanitary product can be fully expanded with water. Due to that, an extremely high internal pressure can be generated in the absorbent body of the used sanitary product.

However, the maximum absorption amount is measured by the following procedure. (1) An unused sanitary product is dried in an atmosphere at 100°C or higher, and the mass of the sanitary product is measured. (2) In a case where a stretchable material (for example, a stretchable member around the legs, around the waist, or the like) that can form a pocket that makes it difficult for water to reach the absorbent body is disposed in the sanitary product, a cut is made in the stretchable member to flatten the sanitary product. (3) The sanitary product is immersed in a water bath filled with sufficient tap water with the liquid-permeable sheet facing down, and left for 30 minutes. (4) After leaving, the sanitary product is placed on a net with the liquid-permeable sheet facing down and drained for 20 minutes, and then the mass of the sanitary product is measured. Then, a mass difference before and after the immersion in tap water is defined as the maximum absorption amount.

Next, in the decomposition step S12, a physical impact is applied to the plurality of used sanitary products unfolded and swollen by the pretreatment step S11 to decompose the plurality of used sanitary product into a film (liquid-impermeable sheet), a nonwoven fabric (liquid-permeable sheet), and a core wrap, and an absorbent core (for example, an absorbent body and a super absorbent polymer).

The used sanitary product is unfolded and flat by the pretreatment step S11, and any portion of the surface is likely to burst due to expansion. In the present embodiment, the bonding force of the adhesive is particularly reduced due to the heat of hot water. Accordingly, in the decomposition step S12, by applying a physical impact to the used sanitary product in that state, among any portion of the surface, a bonding portion between the liquid-permeable sheet (nonwoven fabric) and the liquid-impermeable sheet (film), where the bonding force is particularly reduced, burst. Therefore, the bonding portion can be torn (peeled). The physical impact is not particularly limited, and for example, a method of throwing the used sanitary product on a surface made of a material harder than the used sanitary product, a method of causing the used sanitary product to be sandwiched and pass between a pair of rolls disposed to face each other and pressing the used sanitary product from both sides, and the like.

In the present embodiment, the decomposition step S12 includes a step of putting the plurality of swollen used sanitary products into a bottom portion of a rotating drum having a horizontal rotating shaft, and a step of rotating the rotating drum around the rotating shaft, pulling the plurality of used sanitary products to the upper part of the rotating drum and throwing them to the bottom portion. Accordingly, a physical impact can be stably, continuously (consecutively), and easily applied to the plurality of used sanitary products. As the rotating drum, a rotating drum of a washing tub of a horizontal washing machine is used, for example, and accordingly, the decomposition step S12 can be carried out using a horizontal washing machine of the related art (for example, ECO-22B manufactured by Inamoto Manufacturing Co., Ltd.). A size of the rotating drum is not particularly limited as long as the impact described above can be realized, and an inner diameter and a depth are, for example, 50 to 150 cm and 30 to 120 cm. A rotation speed of the rotating drum is not particularly limited as long as the impact described above can be realized, and is, for example, 30 times/min to 100 times/min.

In addition, a temperature of the used sanitary product is kept relatively high by the hot water absorbed in the used sanitary product, but from a viewpoint of suppressing a temperature drop of the adhesive and maintaining the sterilizing effect, the temperature of the atmosphere in the rotating drum is preferably 70°C or higher and more preferably 75°C or higher. The temperature in the rotating drum is preferably 98°C or lower and more preferably 90°C or lower, from a viewpoint of handling the used sanitary product. It is preferable that the amount of water in the rotating drum is as small as possible, and that the amount of used sanitary product at least at the bottom portion is so small that it does not fall below the water surface. In a case where the used sanitary product is below the water surface, the impact on the used sanitary product is absorbed by the water, and it is difficult to apply the desired impact to the used sanitary product. The time for rotating the rotating drum is not particularly limited as long as the liquid-permeable sheet, the liquid-impermeable sheet, the core wrap, and the like and the absorbent core can be decomposed, and is, for example, 2 to 40 minutes and preferably 4 to 20 minutes.

In used sanitary product, the bonding portion between the liquid-permeable sheet (nonwoven fabric) and the liquid-impermeable sheet (film) burst and torn off by the physical impact. At the same time, through a crevice, the internal pressure of the absorbent body causes the absorbent core (for example, pulp fiber and super absorbent polymer) in the used sanitary product to spurt out (burst out). Accordingly, the used sanitary product can be more reliably decomposed into the liquid-permeable sheet (nonwoven fabric), the liquid-impermeable sheet (film), and the core wrap, and the absorbent core (for example, pulp fiber-containing material containing pulp fiber and super absorbent polymer).

Next, in the separation step S13, the plurality of films (liquid-impermeable sheets), the plurality of nonwoven fabrics (liquid-permeable sheets), the core wrap, and the like are separated from the absorbent core (for example, pulp fiber and super absorbent polymer). However, the nonwoven fabric may remain bonded to the film. The separation method is not particularly limited, and examples thereof include a method of using a sieve that allows the absorbent core to pass through without passing through the liquid-permeable sheet, the liquid-impermeable sheet, the core wrap, or the like.

In the present embodiment, the separation step S13 includes an inactivation step S31 of inactivating the super absorbent polymer with an aqueous solution containing an inactivating agent before separating the film, the nonwoven fabric, and the core wrap, from the absorbent core, and a first separation step S32 of separating the film and the nonwoven fabric from the pulp fiber, the inactivated super absorbent polymer, and a mixture containing wastewater discharged from the super absorbent polymer by the inactivation.

In the inactivation step S31, before the first separation step S32, the liquid-permeable sheet (nonwoven fabric), the liquid-impermeable sheet (film), and the absorbent body (pulp fiber and super absorbent polymer) are immersed in an aqueous solution containing an inactivating agent capable of inactivating the super absorbent polymer. Accordingly, the super absorbent polymer attached to the liquid-permeable sheet, the liquid-impermeable sheet, and the pulp fiber can be inactivated. As a result, the super absorbent polymer in a high viscosity state before the inactivation can be made into a super absorbent polymer in a low viscosity state by dehydration by the inactivation.

Here, the inactivating agent is not particularly limited, and examples thereof include an acid (for example, inorganic acid and organic acid), lime, calcium chloride, magnesium sulfate, magnesium chloride, aluminum sulfate, aluminum chloride, and the like. The acid is preferable because it does not leave ash content in the pulp fiber. In a case where the acid is used as the inactivating agent, the pH is preferably 2.5 or less and more preferably 1.3 to 2.4. In a case where the pH is extremely high, water absorption capacity of the super absorbent polymer cannot be sufficiently reduced. In addition, the sterilizing ability may be reduced. In a case where the pH is extremely low, there is a risk of equipment corrosion, and a large amount of alkaline chemicals are required for neutralization treatment during sewage treatment.

Examples of the inorganic acid include a sulfuric acid, a hydrochloric acid, and a nitric acid, and the sulfuric acid is preferable from a viewpoint of not containing chlorine and cost. Meanwhile, examples of the organic acid include a citric acid, a tartaric acid, a glycolic acid, a malic acid, a succinic acid, an acetic acid, and an ascorbic acid, and an acid capable of forming a complex with a metal ion contained in excrement, for example, a hydroxycarbonate-based organic acid such as a citric acid, a tartaric acid, and a gluconic acid are particularly preferable. Examples of metal ions contained in excrement include calcium ions. This is because the metal ions in the excrement can be trapped and removed by a chelating effect of the acid capable of forming a complex with the metal ions contained in the excrement. In addition, the citric acid can be expected to have a high dirt component removing effect due to its cleaning effect. Since the pH changes depending on the water temperature, the pH in the present disclosure refers to pH measured at an aqueous solution temperature of 20°C.

A treatment temperature of the inactivation step S31, that is, a temperature of the aqueous solution containing the inactivating agent is not particularly limited as long as the inactivating reaction proceeds. The treatment temperature may be room temperature or higher than room temperature, and is, for example 15 to 30°C. In addition, a treatment time of the inactivation step S31, that is, a time for immersing the liquid-permeable sheet, the liquid-impermeable sheet, and the absorbent body in the aqueous solution containing the inactivating agent is not particularly limited as long as the super absorbent polymer is inactivated and dehydrated, and is, for example, 2 to 60 minutes and preferably 5 to 30 minutes. In addition, an amount of the aqueous solution in the inactivation step S31, that is, an amount of the aqueous solution containing the inactivating agent is not particularly limited as long as the inactivating reaction proceeds. The amount of the aqueous solution is, for example, preferably 300 to 3,000 parts by mass, more preferably 500 to 2,500 parts by mass, and even more preferably 1,000 to 2,000 parts by mass with respect to 100 parts by mass of the used sanitary product.

In the first separation step S32, the liquid-permeable sheet (nonwoven fabric), the liquid-impermeable sheet (film), and the core wrap are separated from the pulp fiber, the inactivated super absorbent polymer, and the mixture containing the wastewater discharged from the super absorbent polymer due to the inactivation. However, the wastewater is wastewater containing water released from the super absorbent polymer by dehydration with the aqueous solution containing the inactivating agent in the inactivation step S31, that is, liquid derived from excrement and water derived from hot water.

In the first separation step S32, the method of separating the liquid-permeable sheet and the liquid-impermeable sheet from the pulp fiber, the super absorbent polymer, and the wastewater (pulp fiber-containing material) is not particularly limited. For example, a product produced by the inactivation step (the liquid-permeable sheet, the liquid-impermeable sheet, the pulp fiber, the super absorbent polymer, the wastewater, and the like) is discharged while passing through a screen having an opening of 5 to 100 mm, preferably an opening of 10 to 60 mm. Accordingly, the product can be separated by remaining the pulp fiber, the super absorbent polymer, and the wastewater in the sewage, and remaining the liquid-permeable sheet and the liquid-impermeable sheet on the screen. In addition, other large-shaped materials such as nonwoven fabric and the film may remain on the screen. In particular, since the super absorbent polymer is in a high viscosity state before inactivation, it is not easy to separate the super absorbent polymer attached to the liquid-permeable sheet, the liquid-impermeable sheet, and the pulp fiber. However, after the inactivation, the super absorbent polymer has low viscosity due to dehydration. Therefore, the super absorbent polymer attached to the liquid-permeable sheet, the liquid-impermeable sheet, and the pulp fiber can be easily separated from the liquid-permeable sheet, the liquid-impermeable sheet, and the pulp fiber. Therefore, the constituent members of sanitary product can be efficiently separated and collected.

In the present embodiment, the separation step S13 may further include a second separation step S33 of removing the adhesive of the bonding portion with a solvent that dissolves the adhesive of the bonding portion between the film and the other members. In the present embodiment, the adhesive of each bonding portion is removed with a solvent that dissolves the adhesive of each bonding portion between the film, the nonwoven fabric, and the absorbent body.

In the second separation step S33, the adhesive of the bonding portion between the film (liquid-impermeable sheet) and other members (nonwoven fabric of the liquid-permeable sheet, liquid-permeable sheet, absorbent body remaining on the surface of the liquid-impermeable sheet, and the like) is removed with the solvent. Accordingly, the film and other members can be separated from each other while maintaining the same shape without breaking or the like. Therefore, the constituent members such as the film of sanitary product can be efficiently collected. In addition, since the film and other members can be separated without remaining the adhesive on the film, the film can be reused as a resin having high purity. Accordingly, it is possible to prevent the adhesive from adversely affecting the film when it is reused. The same applies to the nonwoven fabric as well as the film.

The solvent used in the second separation step S33 is not particularly limited as long as it can dissolve the adhesive, and for example, a terpene containing at least one of terpene hydrocarbon, terpene aldehyde, and terpene ketone is used. In this step, an aqueous solution containing terpene is used, and a concentration of terpene in the aqueous solution is, for example, 0.05mass% and more and 2mass% or less. It is preferably 0.075 to 1mass%. In a case where the concentration of terpene is extremely low, the adhesive of the bonding portion may not be able to be dissolved. In a case where the concentration of terpene is extremely high, the cost may increase. In addition, the terpene not only dissolves an adhesive such as a hot-melt adhesive, but also has an oil dirt cleaning effect. Therefore, for example, in a case where the constituent members of the sanitary product such as the liquid-impermeable sheet has printing, the terpene can also decompose and remove the printing ink.

Examples of terpene hydrocarbon include myrcene, limonene, pinene, camphor, sabinene, phellandrene, paracimene, ocimene, terpinene, kalen, zingiberene, caryophyllene, bisabolene, and cedrene. Among these, limonene, pinene, terpinene, and kalen are preferable. In addition, examples of the terpene aldehyde include citronellal, citral, cyclocitral, safranal, phellandral, perillaldehyde, geranial, and neral. Examples of the terpene ketone include camphor and thujone. Among the terpenes, terpene hydrocarbon is preferable and limonene is particularly preferable. There are three types of limonene which are d-limonene, l-limonene, and dipentene (dl-limonene), and any of them can be preferably used. Terpene can be used alone or used in combination of two or more types thereof.

A treatment temperature of the second separation step S33, that is, a temperature of the aqueous solution containing the solvent is not particularly limited as long as the dissolution of the adhesive proceeds and the used sanitary product are decomposed into constituent members. The treatment temperature may be room temperature or higher than room temperature, and is, for example 15 to 30°C. In addition, a treatment time of the second separation step S33, that is, a time for immersing the liquid-permeable sheet, the liquid-impermeable sheet, and the absorbent body in the aqueous solution containing the solvent is not particularly limited as long as the dissolution of the adhesive proceeds and the used sanitary product are decomposed into constituent members. The treatment time is, for example, 2 to 60 minutes and preferably 5 to 30 minutes. An amount of the aqueous solution of the second separation step S33, that is, an amount of the aqueous solution containing the solvent is not particularly limited as long as the dissolution of the adhesive proceeds and the used sanitary product are decomposed into constituent members. The amount of the aqueous solution is, for example, preferably 300 to 3,000 parts by mass and more preferably 500 to 2,500 parts by mass, with respect to 100 parts by mass of the used sanitary product. By the second separation step S33, the amount of the adhesive remaining on the film, the nonwoven fabric, the absorbent body, and the like can be set to 1mass% or less with respect to the film, the nonwoven fabric, the absorbent body, and the like.

In the present embodiment, as another preferred embodiment, the second separation step S33 may be performed together with the inactivation step S31. That is, the adhesive attached to the liquid-permeable sheet, the liquid-impermeable sheet, and the pulp fiber may be dissolved while inactivating the super absorbent polymer attached to the liquid-permeable sheet, the liquid-impermeable sheet, and the pulp fiber. In this case, as the aqueous solution for immersing the liquid-permeable sheet, the liquid-impermeable sheet, the pulp fiber and the super absorbent polymer, an aqueous solution containing both the inactivating agent and the solvent is used. Accordingly, in the inactivation step S31, the liquid-impermeable sheet (film), the liquid-permeable sheet (nonwoven fabric), and the absorbent body (pulp fiber and super absorbent polymer) can be substantially separated in the aqueous solution. Then, in the subsequent first separation step, the liquid-impermeable sheet (film) and the liquid-permeable sheet (nonwoven fabric) can be separated from the absorbent body (pulp fiber and super absorbent polymer), and the second separation step S33 can be omitted. In this case, the liquid-impermeable sheet (film) and the liquid-permeable sheet (nonwoven fabric) are substantially separated by removing the adhesive.

In the present embodiment, the separation step S13 may further include a first drying step S34 for drying the film with atmosphere or hot air at a temperature higher than room temperature to remove the solvent, after the step of removing the adhesive of the bonding portion. In the present embodiment, the nonwoven fabric is also dried in this step.

The sterilization is extremely important in the reuse of the used sanitary product. In the first drying step S34, a step of drying the separated film (liquid-impermeable sheet) and nonwoven fabric (liquid-permeable sheet) in the atmosphere at high temperature or hot air is performed. A drying temperature is, for example, 105°C to 210°C and preferably 110°C to 190°C. A drying time depends on the drying temperature, and is, for example, 10 to 120 minutes and preferably 15 to 100 minutes. Accordingly, not only the solvent remaining on the surface of the film and the nonwoven fabric is evaporated and removed, but also the film and the nonwoven fabric can be sterilized by the atmosphere or hot air at high temperature. Therefore, it is possible to exhibit a sterilizing (disinfecting) effect while removing the solvent.

On the other hand, in the present embodiment, the separation step S13 may include a third separation step S35 of separating the pulp fiber from the separated mixture. In the third separation step S35, the method of separating the pulp fiber from the separated mixture (including the pulp fiber, the super absorbent polymer, and the wastewater) is not particularly limited, and for example, the separated mixture is discharged while passing through a screen having an opening of 0.1 to 4 mm, preferably an opening of 0.15 to 2 mm. Accordingly, the pulp fiber can be separated from the mixture by remaining the super absorbent polymer and the wastewater in the sewage and remaining the pulp fiber (super absorbent polymer remains mainly on surface) on the screen. This pulp fiber contains a large amount of impurities, and it can be reused in this state depending on the purpose. The super absorbent polymer is attached to the separated pulp fiber, and the separated pulp fiber and the super absorbent polymer attached to the pulp fiber are mixed with water at a predetermined ratio, to obtain a pulp fiber-containing material, and the process proceeds to an ozone treatment step S36.

In the present embodiment, the separation step S 13 includes the ozone treatment step S36 of treating the pulp fiber-containing material containing the super absorbent polymer, the pulp fiber, the coupling structure thereof, and water with an aqueous solution containing ozone, reducing a molecular weight of the super absorbent polymer attached to the pulp fiber for solubilization and removal.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure. The pulp fiber-containing material includes, in addition to the free pulp fiber and the free super absorbent polymer, a coupling structure configured with a plurality of super absorbent polymers and a plurality of pulp fibers.

In the ozone treatment step S36, the super absorbent polymer contained in the pulp fiber-containing material (treatment liquid) is oxidatively decomposed by ozone in the aqueous solution and solubilized in the aqueous solution to be removed. The state in which the super absorbent polymer is oxidatively decomposed and solubilized in the aqueous solution refers to a state in which the super absorbent polymer and the coupling structure pass through a 2 mm screen. Accordingly, impurities such as the super absorbent polymer can be removed from the pulp fiber-containing material (treatment liquid) to produce a high-purity pulp fiber. In addition, secondary sterilization, bleaching, and deodorization of pulp fiber can be performed by the ozone treatment.

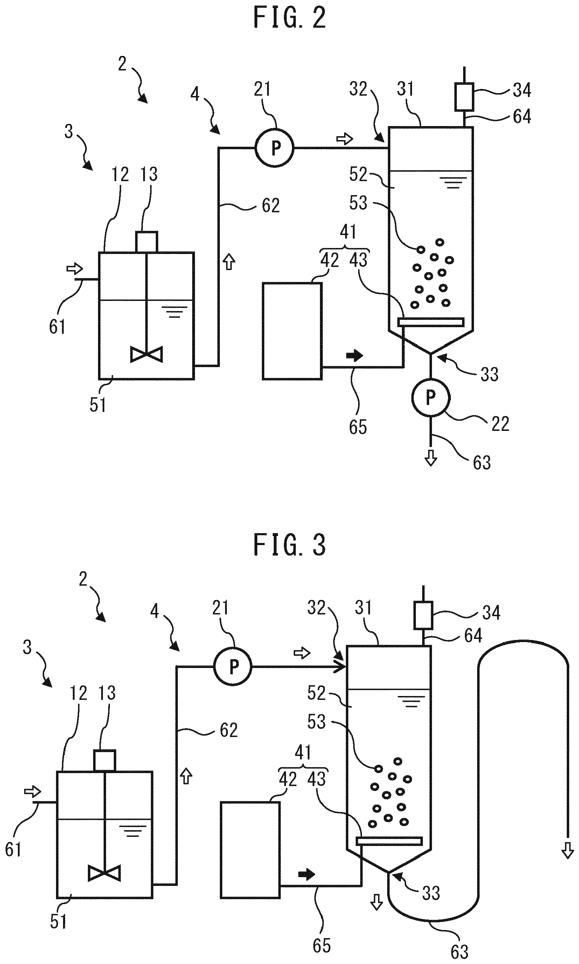

Fig. 2 is a schematic view showing an example of a configuration of an apparatus 2 which executes the ozone treatment step S36. The apparatus 2 includes a pulp fiber-containing material storage unit 3 which stores a pulp fiber-containing material 51 containing water, the pulp fiber separated in the third separation step S35, and the super absorbent polymer, and an ozone treatment unit 4 which removes the super absorbent polymer contained in the pulp fiber-containing material 51 from the pulp fiber by oxidative decomposition.

The pulp fiber-containing material storage unit 3 includes a pulp fiber-containing material tank 12 and a stirrer 13. The pulp fiber-containing material tank 12 stores the pulp fiber-containing material 51 supplied via a pipe 61. The stirrer 13 stirs the pulp fiber-containing material 51 in the pulp fiber-containing material tank 12 so that the pulp fiber and the super absorbent polymer in the pulp fiber-containing material 51 are not separated from water and not precipitated to a lower portion of the pulp fiber-containing material 51.

Meanwhile, the ozone treatment unit 4 includes a supply pump 21, a treatment tank 31, an ozone supply device 41, a delivery pump 22, and an ozone decomposition device 34. The treatment tank 31 contains an acidic aqueous solution as a treatment liquid 52. The treatment tank 31 includes a pulp fiber-containing material supply port 32, a treatment liquid discharge port 33, and an ozone-containing gas supply port 43. The pulp fiber-containing material supply port 32 is disposed on an upper part of the treatment tank 31 and supplies the pulp fiber-containing material 51 to the treatment tank 31. The treatment liquid discharge port 33 is disposed on a lower part of the treatment tank 31 and discharges the treatment liquid 52. The ozone-containing gas supply port 43 is disposed on a lower part of the treatment tank 31, specifically, on an upper part of the treatment liquid discharge port 33, and delivers the ozone-containing gas 53 into the treatment tank 31.

Specifically, the supply pump 21 continuously supplies the pulp fiber-containing material 51 of the pulp fiber-containing material tank 12 into the treatment tank 31 from the pulp fiber-containing material supply port 32 at a first flow rate via the pipe 62. The ozone supply device 41 supplies the ozone-containing gas 53 to the treatment tank 31. Examples of an ozone generation device 42 of the ozone supply device 41 include an ozone water exposure tester ED-OWX-2 manufactured by Ecodesign Co., Ltd., an ozone generation device OS-25V manufactured by Mitsubishi Electric Corporation, and the like. The ozone-containing gas 53 is another type of gas containing ozone, and examples thereof include an oxygen gas containing ozone. The ozone-containing gas supply port 43 delivers the ozone-containing gas 53 supplied to the treatment tank 31 via the pipe 65 into the treatment tank 31, and is disposed on a lower part (preferably the bottom portion) of the treatment tank 31. The ozone-containing gas supply port 43 continuously supplies the ozone-containing gas 53 as a plurality of fine bubbles into the treatment liquid 52 from a lower part to an upper part of the treatment liquid 52 (treatment tank 31). The delivery pump 22 continuously discharges the treatment liquid 52 in the treatment tank 31 from the treatment liquid discharge port 33 to the outside of the treatment tank 31 at a second flow rate via the pipe 63. The ozone decomposition device 34 receives the ozone-containing gas 53 accumulated in the upper part of the treatment tank 31 via the pipe 64, and detoxifies and discharge the ozone to the outside. In addition, the treatment liquid 52 in the treatment tank 31 is only the treatment liquid 52 before the start of the ozone treatment step S36, and is a liquid obtained by mixing the treatment liquid 52 and the pulp fiber-containing material 51 after the start thereof. In the present embodiment, the liquid in the treatment tank 31 including the liquid obtained by mixing the treatment liquid 52 and the pulp fiber-containing material 51 is defined as the treatment liquid 52.

Next, a specific method of the ozone treatment step S36 will be described. The pulp fiber and the super absorbent polymer separated in the third separation step S35 are mixed with water so as to have a preset concentration to obtain the pulp fiber-containing material 51. The concentration of the pulp fiber in the pulp fiber-containing material 51 is set to be the preset concentration in a state in which it is put to the treatment tank 31 and mixed with the treatment liquid 52. The pulp fiber-containing material 51 is supplied to and stored in the pulp fiber-containing material tank 12 via a pipe 61. Since the specific gravity of the pulp fiber and the super absorbent polymer is greater than 1, the pulp fiber-containing material 51 is stirred with the stirrer 13 in the pulp fiber-containing material tank 12 so that the pulp fiber and the super absorbent polymer do not separate from water.

The flow rate of the pulp fiber-containing material 51 in the pulp fiber-containing material tank 12 is controlled by the supply pump 21, and the pulp fiber-containing material 51 is continuously supplied from the pulp fiber-containing material supply port 32 to the treatment tank 31 via the pipe 62 at the first flow rate. The treatment liquid 52 is an acidic aqueous solution and has a specific gravity of approximately 1. Therefore, the pulp fiber and the super absorbent polymer are precipitated from the upper part to the lower part of the treatment liquid 52.

Meanwhile, the ozone-containing gas 53 generated by the ozone generation device 42 is supplied to the treatment tank 31 via the pipe 65 discharged in a state of fine bubbles (for example, microbubbles or nanobubbles) into the treatment liquid 52 from the ozone-containing gas supply port 43 of the treatment tank 31. That is, the ozone-containing gas 53 rises from the lower part to the upper part of the treatment liquid 52.

Then, in the treatment liquid 52, the pulp fiber and the super absorbent polymer which move downward, that is, fall, and the ozone-containing gas 53 which moves upward, that is, rises, proceed to oppose each other and collide with each other. The ozone-containing gas 53 is attached to the surfaces of the pulp fiber, the super absorbent polymer, and the coupling structure. The ozone in the ozone-containing gas 53 oxidatively decomposes the free super absorbent polymer and dissolves it in the treatment liquid 52. Accordingly, the super absorbent polymer on the pulp fiber is removed from the pulp fiber. The pulp fiber falls to the bottom portion of the treatment tank 31, and the ozone-containing gas 53 is released to a space on the upper part of the treatment tank 31.

In the free super absorbent polymer, the free pulp fiber, and the coupling structure, the free super absorbent polymers and coupling structure containing the super absorbent polymer having a relatively low buoyancy tends to have higher sedimentation properties than the free pulp fiber having a relatively high buoyancy. Meanwhile, the ozone-containing gas rises while consuming ozone and treating the super absorbent polymer and the pulp fiber, and accordingly, the ozone-containing gas existing at the lower position has a higher ozone content than the ozone-containing gas existing at an upper position (that is, it tends to be fresh).

Accordingly, the free super absorbent polymer and the coupling structure which move downward relatively quickly, can be accurately oxidatively decomposed with the fresher ozone-containing gas to form free pulp fiber. Meanwhile, since the free pulp fiber moves downward relatively slowly, the ozone-containing gas can treat the free pulp fiber and the recycled pulp fiber to be formed by taking time. Specifically, the ozone in the ozone-containing gas opposes and collides with the pulp fiber, and accordingly, hemicellulose, lignin, and the like of the pulp fiber (and recycled pulp fiber) can be decomposed.

After that, the treatment liquid 52 (including recycled pulp fiber) on the bottom portion of the treatment tank 31 is continuously discharged to outside of the treatment tank 31 from the treatment liquid discharge port 33 of the treatment tank 31 via the pipe 63 at the second flow rate, by controlling the flow rate of the delivery pump 22. The ozone of the ozone-containing gas 53 accumulated on the upper part of the treatment tank 31 is detoxified by the ozone decomposition device 34 and released to the outside.

As described above, the pulp fiber-containing material 51 is continuously supplied into the treatment tank 31 from the upper part of the treatment tank 31 at the first flow rate, and the treatment liquid 52 is continuously discharged from the lower part (bottom portion) of the treatment tank 31 to the outside of the treatment tank 31 at the second flow rate. Accordingly, a continuous and stable flow of fluid (including pulp fiber) from the upper part to the lower part can be forcibly generated in the treatment tank 31.

The treatment liquid 52 discharged from the treatment tank 31 contains a recycled pulp fiber, from which the super absorbent polymer, hemicellulose, lignin, and the like have been removed, and contains a low molecular weight organic material generated by oxidative decomposition of the super absorbent polymer. The recycled pulp fiber is collected in a step at the downstream side of the delivery pump 22, for example, in a fourth separation step S37 which will be described later.

In this method, at least the pulp fiber-containing material 51 containing the pulp fiber and the super absorbent polymer is continuously supplied into the treatment tank 31 containing the treatment liquid 52 capable of dissolving the super absorbent polymer at the first flow rate, and the treatment liquid 52 containing the recycled pulp fiber, from which the super absorbent polymer has been removed, and containing a low molecular weight organic material generated by the oxidative decomposition of the super absorbent polymer is continuously discharged to outside of the treatment tank 31 at the second flow rate. With the configuration described above, a continuous and stable flow of fluid (including pulp fiber) can be forcibly generated from the pulp fiber-containing material supply port 32 for supplying the pulp fiber-containing material 51 in the treatment tank 31 toward the treatment liquid discharge port 33 for discharging the treatment liquid 52. With the flow of the fluid, that is, a water flow, the super absorbent polymer can be treated (solubilized) and the pulp fiber can be treated, even in a case where an amount of treatment of the pulp fiber and the super absorbent polymer is increased.

Here, it is preferable that the first flow rate and the second flow rate are the same. By setting the first flow rate and the second flow rate to be the same, the amount of the treatment liquid 52 in the treatment tank 31 can be maintained constant, and stable and continuous treatment can be realized. However, in a case where the amount of the treatment liquid 52 in the treatment tank 31 can be maintained substantially constant, that is, unless the amount of the treatment liquid 52 in the treatment tank 31 is significantly increased or decreased, the first flow rate and the second flow rate may fluctuate over time. That is, the first flow rate and the second flow rate do not have to be completely the same at all times, and may be substantially the same on average over time. Here, the expression, substantially the same means that a difference between the first flow rate and the second flow rate is within 5mass%. In this case as well, stable and continuous treatment can be realized.

In a case where the ozone-containing gas 53 is supplied to the treatment liquid 52, an ozone concentration in the treatment liquid 52 is not particularly limited as long as it can oxidatively decompose the super absorbent polymer, and is, for example, 1 to 50 mass ppm, preferably 2 to 40 mass ppm, and more preferably 3 to 30 mass ppm. In a case where the ozone concentration in the treatment liquid 52 is extremely low, the super absorbent polymer cannot be completely solubilized, and the super absorbent polymer may remain in the pulp fiber. On the other hand, in a case where the ozone concentration in the treatment liquid 52 is extremely high, an oxidizing power is also increased, which may damage the pulp fiber and may cause a problem in safety. An ozone treatment temperature is not particularly limited as long as it can oxidatively decompose the super absorbent polymer, and may be kept at room temperature or may be higher than room temperature, for example.

The concentration of ozone in the treatment liquid 52 (aqueous solution) is measured by the following method. (1) In a 100 mL graduated cylinder containing approximately 0.15 g of potassium iodide and 5 mL of a 10% citric acid solution, 85 mL of the treatment liquid 52 in which ozone is dissolved is put and reacted. (2) The treatment liquid 52 after the reaction is moved to a 200 mL Erlenmeyer flask, a starch solution is added into the Erlenmeyer flask, the mixture is colored in purple, and then titrated while stirring until it turns to be colorless with 0.01 mol/L sodium thiosulfate, and the added amount a (mL) is recorded. (3) The concentration of ozone in the aqueous solution is calculated using the following equation. The concentration of ozone in the aqueous solution (mass ppm) is calculated by the following equation: concentration of ozone in the aqueous solution (mass ppm) = a (mL) × 0.24 × 0.85 (mL).

The ozone concentration in the ozone-containing gas 53 is preferably 40 to 200 g/m³, more preferably 80 to 200 g/m³, and even more preferably 100 to 200 g/m³. In a case where the ozone concentration in the ozone-containing gas 53 is extremely low, the super absorbent polymer cannot be completely solubilized, and the super absorbent polymer may remain. In a case where the concentration in the ozone-containing gas 53 is extremely high, it may cause damage to pulp fiber, a deterioration in safety, and an increase in production cost. The ozone concentration in the ozone-containing gas 53 can be measured by, for example, an ultraviolet absorption type ozone concentration meter (for example, manufactured by Ecodesign Co., Ltd.: ozone monitor OZM-5000G).

The concentration of the pulp fiber-containing material (for example, pulp fiber and super absorbent polymer) in the treatment liquid 52 is not particularly limited as long as it is a concentration at which the super absorbent polymer can be oxidatively decomposed by ozone in the treatment liquid 52 and is, for example, 0.1 to 20mass%, preferably 0.2 to 10mass%, and more preferably 0.3 to 5mass%. In a case where the concentration of the pulp fiber is extremely high, there is a risk that the super absorbent polymer cannot be completely solubilized, and the super absorbent polymer may remain in the pulp fiber. On the other hand, in a case where the concentration of the pulp fiber is extremely low, an oxidizing power is also increased, which may damage the pulp fiber and may cause a problem in safety. The concentrations of the pulp fiber and the super absorbent polymer in the pulp fiber-containing material 51 are suitably set based on the concentrations of the pulp fiber and the super absorbent polymer in the treatment liquid 52 and the amount of the treatment liquid 52.

In a case where the ozone is supplied to the treatment liquid 52 containing the pulp fiber and the super absorbent polymer, the treatment liquid 52 is preferably acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). The pH of the treatment liquid 52 is more preferably more than 0.0 and 7.0 or less, and even more preferably 2.5 to 6.0. By treating in an acidic state, the deactivation of ozone is suppressed, the oxidative decomposition effect of the super absorbent polymer by ozone is enhanced, and the super absorbent polymer can be oxidatively decomposed in a short time. In order to maintain the pH of the treatment liquid, the pH of the pulp fiber-containing material 51 may be set to be the same as the pH of the treatment liquid 52, and the pulp fiber-containing material 51 may be supplied to the treatment tank 31. Alternatively, the pH of the treatment liquid 52 may be monitored with a pH sensor, and in a case where the pH fluctuates to the neutral side, a predetermined acidic solution may be added to the treatment liquid 52 by an amount corresponding to a fluctuation range.

The amount of the treatment liquid 52 (including the pulp fiber-containing material 51) in the treatment tank 31 is not particularly limited as long as the super absorbent polymer can be oxidatively decomposed, and it is preferable that a volume V (unit: L) of the treatment liquid 52 in the treatment tank 31 and a mass W (unit: kg) of the pulp fiber satisfy 30 ≦ V/W ≦ 1000. These more preferably satisfy 50 ≦ V/W ≦ 400, and even more preferably satisfy 100 ≦ V/W ≦ 200. In a case where the V/W is extremely small, there is a risk that the super absorbent polymer cannot be completely solubilized, and the super absorbent polymer remains. In a case where the V/W is extremely large, there is a risk that the production cost increases. The volume V of the treatment tank 31 is not particularly limited, and is, for example, 50 to 80 L.

A flow rate Ro (Unit: L/min) of the ozone-containing gas and the volume V (unit: L) of the treatment liquid 52 in treatment tank 31 preferably satisfy 0.01 ≦ R_{O} /V ≦ 1.25. These more preferably satisfy 0.03 ≦ Ro/V ≦ 1.0 and even more preferably satisfy 0.06 ≦ Ro/V ≦ 0.75. In a case where Ro/V is extremely small, there is a risk that the super absorbent polymer cannot be completely solubilized, and the super absorbent polymer may remain in the pulp fiber. In a case where Ro/V is extremely large, it may cause damage to pulp fiber, a deterioration in safety, and an increase in production cost. The flow rate Ro of the ozone-containing gas is not particularly limited, and is, for example, 3 to 6L/min.

The time during which the pulp fiber-containing material is present in the treatment tank 31, that is, the time during which the pulp fiber-containing material is treated in the treatment liquid 52 (hereinafter, also referred to as "in-tank treatment time") changes depending on the purpose such as the decomposition of the hemicellulose in the pulp fiber, decomposition of lignin, and oxidative decomposition of super absorbent polymer, and is not particularly limited. The in-tank treatment time may be short, in a case where the ozone concentration of the treatment liquid 52 is high, and may be long, in a case where the ozone concentration of the treatment liquid 52 is low. The in-tank treatment time is, for example, 15 minutes to 180 minutes and preferably 30 minutes to 60 minutes.

The ozone-containing gas and the pulp fiber-containing material can be brought into contact with each other based on the CT value, which is the product of the ozone concentration (mass ppm) in the treatment liquid and the in-tank treatment time (minutes). The CT value is 8,000 to 11,000 ppm·min, and preferably 9,000 to 10,000 ppm·min. In a case where the CT value is extremely small, the decomposition of hemicellulose, the decomposition of lignin, the decomposition of super absorbent polymer, and particularly the decomposition of hemicellulose may be insufficient. In a case where the CT value is extremely large, it may cause damage to pulp fiber, a deterioration in safety, and an increase in production cost.

The method of measuring the concentration of ozone of the CT value is as described above. In addition, the in-tank treatment time of the CT value means the time (min) for supplying the ozone-containing gas, in the case of a so-called batch type. In a case of a so-called continuous type, the in-tank treatment time means a value obtained by dividing the volume (L) of the treatment liquid in the treatment tank by a discharge amount (L/min) per hour.

While the pulp fiber is present in the treatment tank 31, the super absorbent polymer is oxidatively decomposed into low molecular weight components by ozone and dissolved in the treatment liquid 52. In addition, hemicellulose in the pulp fiber is decomposed by the ozone, and a part thereof is dissolved in the treatment liquid 52. In addition, lignin in the pulp fiber is decomposed by the ozone and dissolved in the treatment liquid 52. The low molecular weight component of the super absorbent polymer, the decomposition product of hemicellulose, the decomposition product of lignin, and the like dissolved in the treatment liquid 52 are discharged together with the treatment liquid 52. In addition, in this step, the used sanitary product is primarily disinfected by the sterilization action of the ozone.

The production method of the present disclosure includes the recycled pulp fiber forming step. The recycled pulp fiber forming step is not particularly limited as long as the recycled pulp fiber having a hemicellulose content of less than 8.0mass% is formed from the pulp fiber by supplying the ozone-containing gas to the treatment tank containing the treatment liquid containing the pulp fiber-containing material containing the pulp fiber to be treated, and can be performed by, for example, a so-called batch type, continuous type or the like.

In a case where the pulp fiber to be treated is an unused pulp fiber, the pulp fiber-containing material can be an unused pulp fiber single body. In a case where the pulp fiber to be treated is a used pulp fiber, for example, a pulp fiber derived from a used sanitary product, the pulp fiber-containing material contains at least the pulp fiber, and may be even the pulp fiber single body. In addition, the pulp fiber-containing material can contain the super absorbent polymer in addition to the pulp fiber, and may contain a coupling structure in which a plurality of super absorbent polymers and a plurality of pulp fibers are coupled, and materials (for example, core wrap, liquid-permeable sheet, liquid-impermeable sheet, and the like) configuring the sanitary product. The ozone-containing gas may be supplied into the treatment liquid in the treatment tank, or may be supplied to the space on the treatment liquid in the treatment tank.

The production method of the disclosure may comprises a provision step, a pulp fiber-containing material supply step, an ozone-containing gas supply step, a recycled pulp fiber forming step, and a treatment liquid discharge step, as set forth below. . A provision step of providing the treatment tank comprising a pulp fiber-containing material supply port, a treatment liquid discharge port, and an ozone-containing gas supply port disposed at a lower position of the treatment tank
- A pulp fiber-containing material supply step of supplying the pulp fiber-containing material to the treatment tank from the pulp fiber-containing material supply port
- An ozone-containing gas supply step of supplying the ozone-containing gas to the treatment liquid in the treatment tank from the ozone-containing gas supply port
- The recycled pulp fiber forming step of forming the recycled pulp fiber from the pulp fiber to be treated, by bringing the pulp fiber-containing material into contact with the ozone-containing gas while raising the ozone-containing gas in the treatment tank
- A treatment liquid discharge step of discharging the treatment liquid containing the recycled pulp fiber from the treatment liquid discharge port.

The treatment liquid discharge port is disposed on a lower side of the pulp fiber-containing material supply port, and in the recycled pulp fiber forming step, the pulp fiber-containing material may be brought into contact with the ozone-containing gas while the pulp fiber-containing material is lowered. In addition, the treatment liquid discharge port is disposed on an upper side of the pulp fiber-containing material supply port, and in the recycled pulp fiber forming step, the pulp fiber-containing material may be brought into contact with the ozone-containing gas while raising the pulp fiber-containing material.

In the present embodiment, as one of the aspects, the ozone treatment step S36 (continuous treatment step) includes a step of continuously discharging the treatment liquid 52 from the lower part of the treatment tank 31 while continuously supplying the pulp fiber-containing material 51 from the upper part of the treatment tank 31. The pulp fiber and the super absorbent polymer in the pulp fiber-containing material 51 have low buoyancy, and the pulp fiber, the super absorbent polymer, and the coupling structure are naturally precipitated.

In the present embodiment, as one of the aspects, the treatment liquid 52 capable of dissolving the super absorbent polymer is an aqueous solution containing an ozone-containing gas that oxidatively decomposes the super absorbent polymer so as to be soluble. The ozone treatment step S36 (continuous treatment step) further includes a delivery step of continuously delivering a plurality of bubbles of the ozone-containing gas from the lower part to the upper part of the treatment liquid 52. In one of such aspects of the method, in the treatment liquid 52, the ozone-containing gas rises, and the pulp fiber and the super absorbent polymer fall, that is, have countercurrent. Accordingly, a contact probability between the pulp fiber and the super absorbent polymer, and the ozone-containing gas can be increased. In addition, the deeper the pulp fiber and super absorbent polymer are precipitated, the higher the concentration of ozone-containing gas can be contacted. Therefore, the super absorbent polymer, hemicellulose, lignin, and the like, which could not be completely dissolved in the treatment liquid 52 only by the ozone-containing gas coming into contact with a shallow part of the treatment liquid 52, can come into contact with the high-concentration ozone-containing gas in the treatment liquid 52 in the deep part. As a result, the super absorbent polymer, hemicellulose, lignin, and the like can be decomposed, dissolved in the treatment liquid 52, and removed from the pulp fiber.

In the present embodiment, as one of the aspects, the delivery step described above includes a step of delivering the ozone-containing gas in a state of microbubbles or nanobubbles. However, the microbubbles are bubbles having a diameter of approximately 1 to 1,000 µm and preferably approximately 10 to 500 µm, and the nanobubbles are bubbles having a diameter of approximately 100 to 1000 nm, preferably approximately 100 to 500 nm. The microbubbles or nanobubbles are fine bubbles as described above, have properties of a large surface area per unit volume, and a slow speed of rise in the liquid. Therefore, in this method, as one of the aspects, the ozone-containing gas containing the fine bubbles described above is sent from the lower part to the upper part of the treatment liquid 52 in the treatment tank 31.

Meanwhile, the pulp fiber and the super absorbent polymer move from the upper part to the lower part. At this time, since the raising speed of the fine bubbles is slow, the probability that the bubbles come into contact with the pulp fibers can be increased. In addition, since the fine bubbles occupy a small area on the surface of the pulp fiber, more bubbles can come into contact with the surface of the pulp fiber. Accordingly, the pulp fiber, the super absorbent polymer, and the coupling structure can be evenly wrapped with fine bubbles, and a contact area between them and the ozone-containing gas can be further increased. In addition, in a case where the pulp fiber-containing material falls in the recycled pulp fiber forming step, more bubbles come into contact with the surface of the pulp fibers, and accordingly, the sedimentation properties of the pulp fiber, the super absorbent polymer, and the coupling structure can be decreased by the buoyancy of the bubbles, and the contact time between them and the ozone-containing gas can be increased. As a result, the super absorbent polymer, hemicellulose, lignin, and the like can be decomposed, dissolved in the treatment liquid 52, and removed from the pulp fiber.

In the present embodiment, as one of the aspects, the treatment liquid 52 is an acidic aqueous solution and is, for example, an acidic aqueous solution having a pH of 2.5 or less. In that case, even in a case where the super absorbent polymer in the pulp fiber-containing material 51 partially has a remaining water absorption capacity, the water absorption expansion of the super absorbent polymer can be suppressed. Accordingly, the super absorbent polymer can be dissolved in the treatment liquid 52 in a short time, and the super absorbent polymer can be removed more reliably. In particular, in a case where the treatment liquid 52 is an ozone-containing aqueous solution, the ozone in the ozone-containing aqueous solution is less likely to be deactivated, and accordingly, the super absorbent polymer can be oxidatively decomposed in a shorter time, and hemicellulose, lignin, and the like can be decomposed.

In addition, as another preferred embodiment, the configuration of the treatment tank 31 may have a configuration other than that shown in Fig. 2. Fig. 3 is a schematic view showing another configuration example of the apparatus 2 of the ozone treatment step of Fig. 1. The apparatus 2 of Fig. 3 is different from the apparatus 2 of Fig. 2, in that the pipe 63 of the ozone treatment unit 4 has a continuous U-shaped tube structure in which two U-shaped tubes are continuously connected upside down and the delivery pump 22 is omitted. In that case, in a case where the pipe 63 is filled with the treatment liquid 52 and a height of a liquid level of the treatment liquid 52 in the treatment tank 31 is higher than a height of a liquid level of the liquid in the tank of the next step connected by the pipe 63, the treatment liquid 52 is discharged to the tank in the next step via the pipe 63 according to the principle of siphon. Accordingly, in a case where the height of the liquid level of the treatment liquid 52 in the treatment tank 31 is set to be the same as the height of the liquid level of the liquid in the tank of the next step initially before the start of the treatment, when the pulp fiber-containing material 51 is continuously supplied into the treatment tank 31 at the first flow rate by the start of the treatment, the treatment liquid 52 is discharged to the tank in the next step via the pipe 63 at the second flow rate = the first flow rate according to the principle of siphon. However, regarding the height 0 of the liquid level of the liquid in the tank in the next step, the height before the start of the treatment is maintained even during the treatment. In this case, the delivery pump 22 is not necessary, and the control of the second flow rate of the delivery pump 22 is not necessary.

In the present embodiment, the separation step S13 further includes a fourth separation step S37 of separating the pulp fiber from the treatment liquid 52 discharged from the treatment tank 31, and a second drying step S38 of drying the separated pulp fiber.

In the fourth separation step S37, the method of separating the pulp fiber from the treatment liquid 52 discharged from the treatment tank 31 is not particularly limited, and for example, a method of causing the treatment liquid 52 containing the recycled pulp fiber to pass a screen mesh having an opening of 0.15 to 2 mm is used. In a case where the treatment liquid 52 containing the recycled pulp fiber is passed through a screen mesh having an opening of 0.15 to 2 mm, wastewater containing a oxidative decomposition product of the super absorbent polymer, a decomposition product of hemicellulose, a decomposition product of lignin, and the like passes through the screen. In contrast, the recycled pulp fiber remains on the screen.

In the subsequent second drying step S38, the separated pulp fiber is dried with an atmosphere at a high temperature or hot air to form a recycled pulp fiber. A drying temperature is, for example, 105°C to 210°C and preferably 110°C to 190°C. A drying time depends on the drying temperature, and is, for example, 10 to 120 minutes and preferably 15 to 100 minutes. Accordingly, the moisture remaining on the surface of the pulp fiber is evaporated and removed, and a recycled pulp fiber having extremely low super absorbent polymer content and high purity can be collected. In addition, the recycled pulp fiber can be sterilized (disinfected) in the atmosphere at a high temperature or hot air. In the subsequent cellulose use step, in a case where the recycled pulp fiber is used in a wet state, the second drying step S38 can be omitted. In addition, in a case where the recycled pulp fiber is a pulp fiber for a culture medium, the pulp fiber for a culture medium may not be stored, and in a case of performing the cellulase generation step, the second drying step S38 can be omitted.

In the present disclosure, the recycled pulp fiber has a hemicellulose content of less than 8.0mass%, and has a hemicellulose content of preferably 7.0mass% or less, more preferably 6.5mass% or less, and even more preferably 6.0mass% or less. Accordingly, the recycled pulp fiber can be suitably used as a cellulose raw material for cellulose-derived products. In addition, in a case where the recycled pulp fiber is a pulp fiber for a culture medium, cellulase can be efficiently produced from the pulp fiber for a culture medium. A lower limit of the hemicellulose content is 0.0mass%.

In the present disclosure, the recycled pulp fiber has a lignin content of less than 0.10 mass%, preferably 0.08mass% or less, and more preferably 0.06mass% or less. Accordingly, the recycled pulp fiber can be suitably used as a cellulose raw material for cellulose-derived products. In addition, in a case where the recycled pulp fiber is a pulp fiber for a culture medium, cellulase can be efficiently produced from the pulp fiber for a culture medium. A lower limit of the lignin content is 0.00mass%.

In the present disclosure, the recycled pulp fiber has a cellulose content of preferably 87.0mass% or more, more preferably 90mass% or more, and even more preferably 93mass% or more. Accordingly, the recycled pulp fiber can be suitably used as a cellulose raw material for cellulose-derived products. In addition, in a case where the recycled pulp fiber is a pulp fiber for a culture medium, cellulase can be efficiently produced from the pulp fiber for a culture medium. An upper limit of the cellulose content in the recycled pulp fiber is 100.0mass%.

In the present disclosure, the cellulose content, the hemicellulose content, and the lignin content in recycled pulp fiber can be measured according to a well-known detergent analysis method.

In the present disclosure, the recycled pulp fiber has a beating degree reduction rate of preferably 300 mL or more, more preferably 320 mL or more, even more preferably 340 mL or more, and still more preferably 360 mL or more. Accordingly, the recycled pulp fiber is easily fluffed to easily extract cellulose, in the subsequent step of using the recycled pulp fiber, for example, the cellulose use step of forming a cellulose nanofiber, a viscose rayon, a cellulose derivative, a bioethanol, a molding material, or a processed paper product. In addition, in a case where the recycled pulp fiber is a pulp fiber for a culture medium, cellulase can be efficiently produced in the cellulase generation step due to the fluffiness (size of surface area) of the pulp fiber for a culture medium.

In the production method of the present disclosure, the recycled pulp fiber has a beating degree reduction rate of preferably 990 mL or less, more preferably 800 mL or less, even more preferably 700 mL or less, and still preferably 600 mL or less. By doing so, it is possible to prevent damage to the recycled pulp fiber and the cellulose to be extracted. In addition, in a case where the recycled pulp fiber is a pulp fiber for a culture medium, it is possible to prevent that the pulp fiber for a culture medium is less likely to be collected. The beating degree reduction rate is obtained by a low hemicellulose content in the recycled pulp fiber, a low lignin content, and the like.

The beating degree reduction rate is measured according to the following beating degree reduction test.

### <beating degree reduction test>

(1) The recycled pulp fiber is beaten for 1 hour or longer, preferably 2 hours according to the pulp-beating method-Part 1: beater method of JIS P8221-1: 1998.
(2) Samples are collected every 20 minutes after the start of beating, and the beating degree of each sample (Canadian standard freeness) is measured according to the pulp-freeness test method-Part 2: Canadian standard freeness method of JIS P8121-2: 2012. The test may be stopped in a case where the beating degree of the sample is less than 100 mL.
(3) The time (h) is plotted on a horizontal axis and the beating degree (mL) is plotted on a vertical axis, and approximated to a linear function by the least squares method, and an absolute value of a slope is used as the beating degree reduction rate (mL/m).

A large value of the beating degree reduction rate means that the reduction in beating degree per unit time is fast, that is, the recycled pulp fiber is easily beaten (easily fluffed).

In the present disclosure, the recycled pulp fiber has a water contact angle of preferably 20° or less, more preferably 15° or less, and even more preferably 10° or less. By doing so, the recycled pulp fiber produced by the production method described above can be easily dispersed in an aqueous solution, in a case where the cellulose is extracted out after being dried and stored. In addition, in a case where the recycled pulp fiber is a pulp fiber for a culture medium, the pulp fiber for a culture medium produced by the production method described above is dried and stored, and then in a case of forming a culture medium for cellulase-producing microorganism in the cellulase generation step, the moisture can be easily included. From the above viewpoint, the water contact angle of the recycled pulp fiber may be 0°.

The water contact angle of the recycled pulp fiber can be measured as follows.
(1) An aluminum ring (outer diameter: 43 mm, inner diameter: 40 mm, height: 5 mm) and the pulp fiber for saccharification dried at 120°C for 60 minutes are prepared and left for 24 hours in a constant temperature and constant humidity chamber with a temperature of 20 ± 5°C and a humidity of 65 ± 5% RH.
(2) 1.5 g of the recycled pulp fiber is evenly filled in the aluminum ring, and the recycled pulp fiber is compressed together with the aluminum ring at a pressure of 3 Mpa for 1 minute using a press machine with a smooth bottom face and the surface of the recycled pulp fiber is smoothed.
(3) The water contact angle of the compressed recycled pulp fiber is measured based on 6. sessile drop method of "Method for testing the wettability of the substrate glass surface" of JIS R3257: 1999. As a contact angle measuring device, an automatic contact angle meter CA-V type manufactured by Kyowa Interface Science Co., Ltd. is used. The water contact angle means a value after 200 ms after dropping deionized water.
(4) The water contact angle is measured in 20 different samples, and an average value thereof is used.

In the present disclosure, the recycled pulp fiber has an ash content of preferably 0.65mass% or less, more preferably 0.50mass% or less, even more preferably 0.30mass%, and still preferably 0.20mass% or less. By doing so, in a case where the cellulose is extracted from the recycled pulp fiber, the metal ion and its precipitate are less likely to damage the equipment and are less likely to disturb the miniaturization of the recycled pulp fiber. In addition, in a case where the recycled pulp fiber is a pulp fiber for a culture medium, metal ions and their precipitates are less likely to damage the equipment in a case where a culture medium for cellulase-producing microorganism is formed by using the pulp fiber for a culture medium. The ash content can be lowered by selecting an acid capable of forming a complex with a metal ion contained in excrement as an inactivating agent, particularly a citric acid, in the inactivation step S31 of inactivating the super absorbent polymer.

In the present specification, the ash content means the amount of an inorganic or nonflammable residue left after the organic matter is ashed, and the ash content means the ratio (mass ratio) of the ash content contained in the material to be promoted. The ash content is measured according to "5. Ash content test method" of "2. General test method" of the material standard for menses treatment products. Specifically, the ash content is measured as follows. (1) A platinum, quartz, or porcelain crucible is preheated at 500°C to 550°C for 1 hour, allowed to cool, and then the mass thereof is precisely weighed. (2) 2 to 4 g of the recycled pulp fiber dried at 120°C for 60 minutes is collected and put in a crucible, and the mass thereof is weighed precisely, it is weakly heated at first by removing or shifting a lid of the crucible, if necessary, and the temperature is gradually increased to heat at 500°C to 550°C for 4 hours or longer to ash until no carbide remains. (3) After allowing to cool, the mass is weighed precisely. The residue is ashed again to a constant weight, allowed to cool, and then the mass thereof is precisely weighed to obtain the ash content (mass%).

In the present disclosure, in a case where the recycled pulp fiber, particularly, the recycled pulp fiber, is a pulp fiber for a culture medium, in the recycled pulp fiber (pulp fiber for a culture medium), preferably Bacillus cereus and Bacillus subtilis are not detected, more preferably Bacillus bacteria are not detected, and even more preferably bacteria are not detected by a pour culture method.

The Bacillus bacteria, for example, Bacillus cereus and Bacillus subtilis are normal bacterial flora universally present in soil, water, plants, and the like, and are bacteria having extremely durability to form spores. The spores are high durability to heat, disinfectants, and the like, and may not be completely removed by general disinfection methods. For example, cellulase-producing microorganism may be disturbed from producing cellulase.

Examples of bacteria that can be detected by the pour culture method include general viable bacteria, for example, Bacillus cereus, Bacillus subtilis, Staphylococcus aureus, Pseudomonas aeruginosa, non-fermenting bacilli of glucose, and Aeromonas.

Bacteria, specifically, general viable bacteria are not detected by the pour culture method. Therefore, for example, in a case where cellulase is produced using the culture medium for cellulase-producing microorganism containing the pulp fiber for a culture medium, the activity of the cellulase-producing microorganism is less likely to be disturbed. Therefore, the pulp fiber for a culture medium is excellent in the productivity of cellulase because bacteria and the like are not detected from the pulp fiber for a culture medium.

In addition, it is preferable that bacteria are not detected in the pulp fiber for a culture medium by the plate culture method. Bacteria, specifically, enteric bacteria are not detected by the plate culture method. Therefore, for example, in a case where cellulase is produced using the culture medium for cellulase-producing microorganism containing the pulp fiber for a culture medium, the activity of the cellulase-producing microorganism is less likely to be disturbed. Therefore, the pulp fiber for a culture medium is excellent in the productivity of cellulase because bacteria and the like are not detected from the pulp fiber for a culture medium.

Examples of the enteric bacteria include Escherichia coli, Klebsiella oxytoca, Citrobacter freundii, and Klebsiella spp., Klebsiella pneumoniae, Enterobacter cloacae, Proteus mirabilis, Enterobacter spp., Enterobacteraerogenes, Morganellamorgani, Providenciarettgeri, and the like.

The culture method including the plate culture method and the pour culture method is carried out as follows.
(1) In a 1-liter beaker, 500 g of an aqueous dispersion liquid having a solid content concentration of 5.0mass% of the recycled pulp fiber (for example, pulp fiber for a culture medium) is prepared. In a case where the recycled pulp fiber exists in a dry state, the aqueous dispersion liquid can be formed by mixing the recycled pulp fiber (25.0 g as a solid content) and deionized water (amount with a total amount of 500.0 g). Then, in a case where the recycled pulp fiber is present in the aqueous solution (for example, in a case where the recycled pulp fiber is collected as the aqueous solution in the method of producing the recycled pulp fiber), when the solid content concentration of the recycled pulp fiber is 5.0mass% or more, the deionized water is added to the aqueous solution to prepare the aqueous dispersion liquid having a solid content concentration of 5.0mass% of the recycled pulp fiber.

In addition, in a case where the recycled pulp fiber is present in the aqueous solution and the solid content concentration of the recycled pulp fiber is less than 5.0mass%, the solid content concentration of the recycled pulp fiber is adjusted to 5.0mass% by filtration, or the above aqueous solution itself is used as the aqueous dispersion liquid to increase an inoculation amount of the serially diluted sample which will be described later (for example, in a case where the solid content concentration of the recycled pulp fiber is 2.5mass%, inoculation amount can be doubled).

(2) The aqueous dispersion liquid is stirred for 15 minutes at a rotation speed of 300 rpm using an overhead stirrer.

(3) 50 mL of the aqueous dispersion liquid stirred with an overhead stirrer is placed in a sterile bag with a filter (manufactured by LMS, a sterile bag with a filter for a homogenizer) and stirred for 5 minutes.

(4) The aqueous dispersion liquid filtered through a sterile bag with a filter is dispensed into a sterilized test tube, 10-fold serially diluted to 10-9, dispensed into a sterilized test tube, and serially diluted sample is prepared.

(5-1) The number of enteric bacteria is measured by a plate culture method. Specifically, 0.1 mL of each of the serially diluted samples is inoculated into a BTB lactose-added agar medium (manufactured by Nippon Becton Dickinson, 251251), the serially diluted samples are applied with a cell spreader, and the cells are cultured at 35°C for 24 hours.

(5-2) The number of general viable bacteria is measured by the pour culture method. Specifically, 1 mL of a serially diluted sample and a standard agar medium (manufactured by Nihon Pharmaceutical Co., Ltd., 396-00175 SCD agar medium "Daigo" for general viable bacteria test, 15 to 20 g) are placed in a petri dish and mixed and cultured at 35°C for 48 hours.

(6) For each of the number of enteric bacteria and the number of general viable bacteria, the number of colonies that have grown after culturing is counted. In a case where the number of colonies is zero in all the serially diluted samples 10-fold serially diluted to 10-9, it is determined that the target bacterium is "not detected".

(7) In a case where the colonies of enteric bacteria or general viable bacteria are formed after culturing, the type of bacteria can be identified. The identification can be performed by a biochemical property inspection method.

In the present embodiment, as a preferred embodiment, the method further includes the inactivation step S31 of inactivating absorption performance of the super absorbent polymer in the mixture by treating a mixture using the aqueous solution capable of inactivating the absorption performance of the super absorbent polymer before the ozone treatment step S36 (continuous treatment step), and the first separation step S32 of separating the inactivated super absorbent polymer and the pulp fiber from the aqueous solution before the ozone treatment step S36 (continuous treatment step). As described above, in the present method, as a preferred embodiment, in the inactivation step S31, the water absorption performance of the super absorbent polymer is suppressed by the aqueous solution capable of inactivating the water absorption performance of the super absorbent polymer, and accordingly, at the stage of ozone treatment step S36 (continuous treatment step) which is the subsequent step, the super absorbent polymer can be more easily dissolved by the treatment liquid 52 in a short time.

In the present embodiment, as a preferred embodiment, in the inactivation step S31, the aqueous solution capable of inactivating the water absorption performance of the super absorbent polymer is an acidic aqueous solution, for example, an acidic aqueous solution having a pH of 2.5 or less. As described above, in the present method, as a preferred embodiment, since the aqueous solution capable of inactivating the absorption performance of the super absorbent polymer is an acidic aqueous solution, the super absorbent polymer is more easily inactivated, and accordingly, at the stage of the inactivation step S31, the absorption performance of the super absorbent polymer can be suppressed more reliably. As a result, the super absorbent polymer can be more easily dissolved by the treatment liquid for a short time at the stage of the ozone treatment step S36 (continuous treatment step) which is the subsequent step.

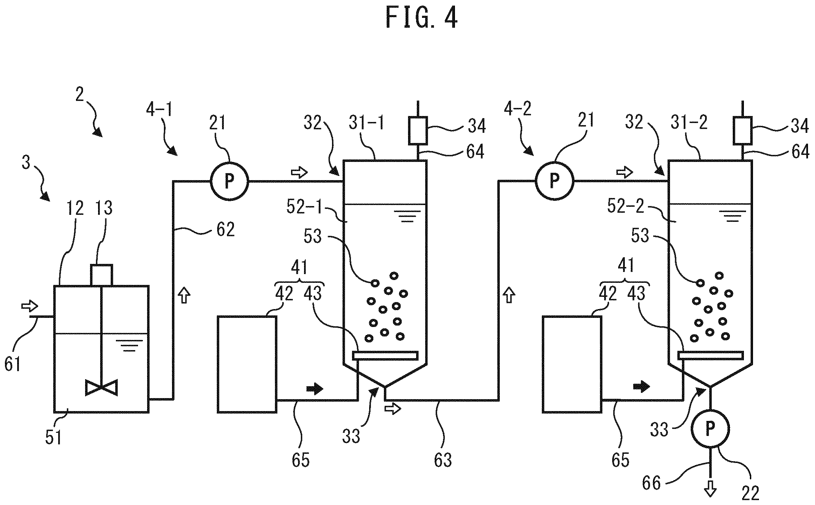

In addition, as another preferred embodiment, the treatment tank 31 may include at least a first treatment tank 31-1 and a second treatment tank 31-2 coupled in series with each other. Fig. 4 is a schematic view showing another configuration example of the apparatus 2 of the ozone treatment step of Fig. 1. The apparatus 2 of Fig. 4 is different from the apparatus 2 of Fig. 2 in that two ozone treatment units 4 are bonded in series, in other words, the first treatment tank 31-1 and the second treatment tank 31-2 are bonded in series. In that case, for example, the first treatment tank 31-1 supplies the pulp fiber-containing material 51 and discharges a first treated liquid (treatment liquid 52-1 of the first treatment tank 31-1), and the second treatment tank 31-2 supplies the first treated liquid and discharges a second treated liquid (treatment liquid 52-2 of the second treatment tank 31-2), thereby treating the pulp fiber-containing material 51 at multiple stages. In that case, compared to the case where one treatment tank 31 having a large capacity is provided, the treatment is performed with new treatment liquids 52-1 and 52-2 for each of the first and second treatment tanks 31-1 and 31-2, and accordingly, for example, the super absorbent polymer that could not be completely dissolved in the first treatment tank (first stage treatment tank) 31-1 can be easily dissolved in the second treatment tank (next stage treatment tank) 31-2, and accordingly, the super absorbent polymer can be dissolved more reliably and can be removed from the fiber.

In addition, as another preferred embodiment, the treatment tank 31 may include an ejector. For example, the ejector includes a driving fluid supply port, a mixed fluid discharge port connected to the treatment tank, and a suction fluid supply port between them, and supplies ozone to the suction fluid supply port while supplying the pulp fiber-containing material 51 to the driving fluid supply port of the ejector, and a mixed solution formed by mixing the pulp fiber-containing material 51 and the ozone in the ejector is ejected to the treatment liquid in the treatment tank from the mixed fluid ejection port.

By supplying the pulp fiber-containing material 51 as the driving fluid and ozone as the suction fluid to the ejector and mixing them in the ejector, the mixture as a mixed fluid obtained by extremely thoroughly mixing the pulp fiber-containing material 51 and the ozone can be efficiently formed. That is, a mixed solution in which the pulp fiber-containing material 51 and ozone are extremely close to each other can be formed. Then, the treatment liquid can be stirred by discharging the mixed liquid into the treatment liquid in the treatment tank. In addition, in a case where the ozone is discharged into the treatment liquid, it is continuously discharged in the state of fine bubbles, so that ozone can be diffused extremely widely in the treatment liquid. As a result, not only the pulp fiber-containing material 51 in the mixed liquid discharged from the ejector, but also the pulp fiber containing the super absorbent polymer in the treatment liquid in the treatment tank, a reaction between the super absorbent polymer and a gaseous material can extremely efficiently proceed.

In the present embodiment, as a preferred embodiment, in the material separation step S 1, in the pretreatment step S11, the used sanitary product are kept in the same shape without breaking and the super absorbent polymer is not inactivated and can be expanded extremely with water. Accordingly, an extremely high internal pressure can be generated in the used sanitary product, and any part of the surface thereof can be in a state where it is likely to be burst. Then, in the decomposition step S12, by applying a physical impact to the used sanitary product in such a state, any part of the surface thereof is torn and the internal absorbent core can be ejected to the outside. Accordingly, the used sanitary product can be decomposed into at least a film (liquid-impermeable sheet) and an absorbent core. At this time, since the film generally maintains its original shape, it can be easily separated from the absorbent core in the subsequent separation step S 13. As a result, the constituent member such as the film can be separated from other constituent members while maintaining the same shape without breaking or the like. Therefore, the constituent members such as the film for sanitary product can be efficiently collected.

In the present embodiment, as a preferred embodiment, by using terpene for removing the adhesive, the hot-melt adhesive for adhering the constituent members of the sanitary product can be dissolved at room temperature. Accordingly, the sanitary product can be easily and neatly separated, the pulp fiber and the super absorbent polymer can be separated from the sanitary product, and the nonwoven fabric and the film can be separated separately while leaving the member form. That is, the pulp fiber, the film, and the nonwoven fabric can be easily collected separately without crushing the sanitary product or going through a complicated separation step. In a case where limonene is used as a terpene, as a side effect of limonene, there is a refreshing citrus odor, and accordingly, the odor derived from excrement can be covered to some extent, and the burden of odor on the worker and the influence of odor on the neighborhood can be reduced. Limonene is a monoterpene and is similar in structure to styrene, and accordingly, a styrene-based hot-melt adhesive commonly used in sanitary product can be dissolved. Since the sanitary product can be cleaned at room temperature, energy costs can be reduced and the generation and diffusion of odors can be suppressed. Terpene has a high oil dirt cleaning effect, and in addition to the effect of dissolving hot-melt adhesive, in a case where there is printing on the film, the printing ink can also be decomposed and removed, and the printed film can also be collected as a high-purity plastic material.

In addition, in a case where an organic acid aqueous solution having a pH of 2.5 or less is used for inactivating the super absorbent polymer, the pulp fiber is difficult to be deteriorated. In a case where a citric acid is used as the organic acid, the effect of removing dirt components derived from excrement can be expected due to the chelating effect and detergency of citric acid. In addition, a sterilizing effect and a deodorizing effect on alkaline odors can be expected.

In addition, by oxidatively decomposing the super absorbent polymer with ozone, it is possible to prevent contamination of pulp fiber and a rapid increase in wastewater due to water absorption of the super absorbent polymer. By adjusting the ozone concentration, it is possible to simultaneously perform oxidative decomposition and sterilization of super absorbent polymer. In addition, in a case where the ozone is used, no chlorine-based chemicals are used, and accordingly it is possible to produce high-quality RPF that does not easily damage a combustion furnace from the collected plastic members. Since no salts are used during the treatment step, there is no residue on the pulp fiber, and high-quality recycled pulp fiber with low ash content can be collected.

In the cellulose use step, as shown in Fig. 1, the dried recycled pulp fiber obtained in the second drying step S38 can be subjected to the cellulose use step to produce a cellulose-derived product, and the undried (wet) recycled pulp fiber obtained in the fourth separation step S37 may be subjected to the cellulose use step to produce a cellulose-derived product, or the treatment liquid 52 containing the recycled pulp fiber obtained in the ozone treatment step S36 can be subjected to a cellulose use step to produce a cellulose-derived product.

Since the recycled pulp fiber produced by the production method of the disclosure has the predetermined hemicellulose content, it is suitable as a cellulose raw material. The cellulose raw material is not particularly limited as long as cellulose is a part of the raw material, and raw materials for various purposes, for example, cellulose nanofibers, viscose rayon, cellulose derivatives, bioethanol, and molding materials, and processed paper products are used. The various purposes will be described later.

The production method of the present disclosure can include a cellulose use step utilizing cellulose from the cycle pulp fiber after the recycled pulp fiber discharge step, for example, after the treatment liquid discharge step. The cellulose use step is not particularly limited as long as cellulose is used, for example, includes a cellulose nanofiber forming step of forming cellulose nanofibers, a viscose rayon forming step of forming viscose rayon, a cellulose derivative forming step of forming a cellulose derivative, a bioethanol forming step of forming bioethanol, a molding material forming step of forming a molding material, or a processed paper product forming step of forming a processed paper product.

The cellulose nanofiber forming step is not particularly limited, and includes a well-known cellulose nanofiber forming method in the technical field. Examples of the cellulose nanofiber forming method include methods disclosed in JP-A-2010-235681 and JP-A-2010-254726.

Regarding the cellulose use step, the viscose rayon forming step is not particularly limited, and includes a well-known viscose rayon forming method in the technical field (for example, a regenerated cellulose fiber forming method, a cellophane forming method, a cellulose sponge forming method). Examples of the viscose rayon forming method include a viscose method and a cuprammonium method. Examples of the viscose rayon include regenerated cellulose fiber, cellophane, and cellulose sponge.

Examples of the above regenerated cellulose fiber include a rayon fiber such as viscose rayon fiber obtained from viscose, polynodic fiber and modar fiber, and a copper ammonia rayon fiber (also referred to as "cupra fiber") obtained from a copper ammonia salt solution of cellulose; and lyocell fiber and tencel fiber which are obtained by an organic solvent spinning method using an organic solvent which is a mixed solution of an organic compound and water and do not pass through a cellulose derivative. Examples of the cellophane include a cellophane tape, a cellophane film, and the like.

Regarding the cellulose use step, the cellulose derivative forming step is not particularly limited, and includes a well-known cellulose derivative forming method in the technical field (for example, semisynthetic cellulose fiber forming method). Examples of the method of forming a cellulose derivative include a method disclosed in JP-A-10-251301. Examples of the above cellulose derivative include a semi-synthetic cellulose fiber, for example, an acetate fiber, for example, a triacetate fiber, and a diacetate fiber. Examples of the cellulose derivative include carboxymethyl cellulose, hydroxyethyl cellulose, and hydroxypropyl cellulose.

Regarding the cellulose use step, the bioethanol forming step is not particularly limited, and includes a well-known bioethanol forming method in the technical field. Examples of the bioethanol forming method include a method disclosed in JP-A-2018-64514.

Regarding the cellulose use step, the molding material forming step is not particularly limited, and includes a well-known molding material forming method in the technical field. Examples of the molding material include a packaging cushioning material, a container, and the like.

Regarding the cellulose use step, the processed paper product forming step is not particularly limited, and includes a well-known processed paper product forming method in the technical field. Examples of the processed paper product include a filter base paper and functional paper.

In the production method of the present disclosure, in a case where the recycled pulp fiber is a pulp fiber for a culture medium, the production method of the present disclosure can further include a cellulase generation step of generating cellulase by using the pulp fiber for a culture medium after the pulp fiber for a culture medium forming step, for example, after the treatment liquid discharge step. The cellulase generation step is not particularly limited as long as cellulase is generated, and includes a well-known cellulase generation method in the technical field. Examples of the cellulase generation method include methods disclosed in JP-A-2008-092910, JP-A-2011-152079, JP-A-2013-202021, and the like.

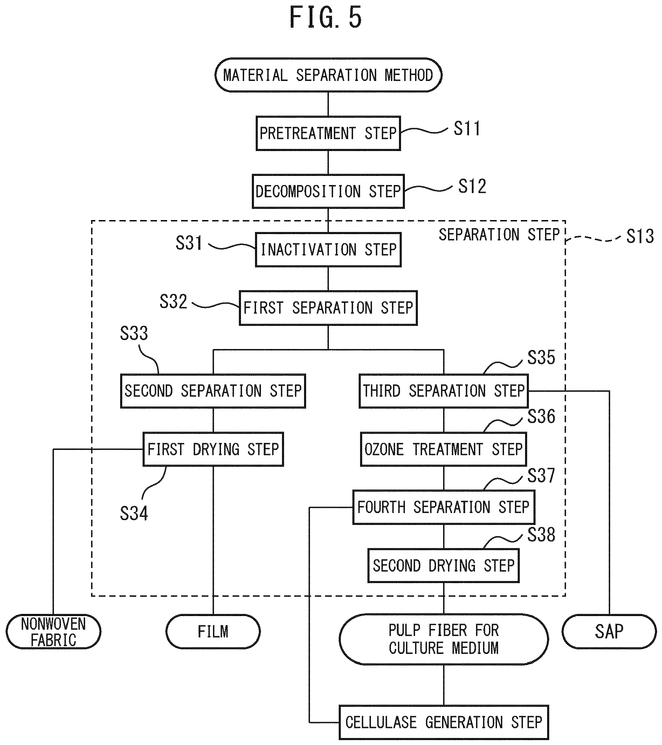

As shown in Fig. 5, the cellulase generation step can be carried out by subjecting the dried pulp fibers for a culture medium obtained in the second drying step S38 to the cellulase generation step, or may be carried out by subjecting the undried pulp fiber for a culture medium obtained in the fourth separation step S37 to the cellulase generation step. Although it is possible to use the treatment liquid 52 containing the pulp fiber for a culture medium obtained in the ozone treatment step S36 in the cellulase generation step, it is not preferable because the remaining ozone may affect the cellulase-producing microorganism.

The present disclosure includes the following aspects A.

### [Aspect A1]

A method of producing a recycled pulp fiber from a pulp fiber contained in a used sanitary product, the method including a recycled pulp fiber forming step of forming the recycled pulp fiber having a hemicellulose content of less than 8.0mass% from the pulp fiber, by supplying an ozone-containing gas to a treatment tank containing a treatment liquid containing a pulp fiber-containing material containing the pulp fiber derived from the used sanitary product.

In the production method described above, a recycled pulp fiber having a predetermined hemicellulose content, that is, a recycled pulp fiber suitable as a cellulose raw material can be produced from the pulp fiber included in the used sanitary product.

In the recycled pulp fiber forming step, the recycled pulp fiber is formed by bringing the ozone-containing gas into contact with the pulp fiber-containing material so that a CT value, which is a product of an ozone concentration and a treatment time, is 8,000 to 11,000 ppm·min.In the production method described above, in the recycled pulp fiber forming step, the recycled pulp fiber is formed by bringing the ozone-containing gas into contact with the pulp fiber-containing material under predetermined conditions. Accordingly, in the production method described above, a recycled pulp fiber having a predetermined hemicellulose content, a desired lignin content, and the like, that is, a recycled pulp fiber suitable as a cellulose raw material can be produced from the pulp fiber included in the used sanitary product.

### [Aspect A2]

The method according to aspect A1, wherein the recycled pulp fiber has a lignin content of 0.10mass% or less.

It is known that pulp fiber contains lignin, in addition to cellulose. For example, it is known that the coniferous trees, which are often used in sanitary products, contain 20mass% to 30mass% of lignin. In addition, in a case where the pulp fiber is used as a cellulose raw material, for example, the lignin present in the pulp fiber remains in cellulose collected from the pulp fiber, and thus in a cellulose-derived product, and the remaining lignin may disturb functions of the cellulose-derived product. In the production method described above, a recycled pulp fiber having a predetermined lignin content, that is, a recycled pulp fiber suitable as a cellulose raw material can be produced from the pulp fiber included in the used sanitary product.

### [Aspect A3]

The method according to any one of the aspects A1 to A2, in which the method further includes a provision step of providing the treatment tank including a pulp fiber-containing material supply port, a treatment liquid discharge port, and an ozone-containing gas supply port disposed at a lower position of the treatment tank, a pulp fiber-containing material supply step of supplying the pulp fiber-containing material to the treatment tank from the pulp fiber-containing material supply port, an ozone-containing gas supply step of supplying the ozone-containing gas to the treatment liquid in the treatment tank from the ozone-containing gas supply port, the recycled pulp fiber forming step of forming the recycled pulp fiber from the pulp fiber, by bringing the pulp fiber-containing material into contact with the ozone-containing gas while raising the ozone-containing gas in the treatment tank, and a treatment liquid discharge step of discharging the treatment liquid containing the recycled pulp fiber from the treatment liquid discharge port.

Since the hemicellulose has a lower specific gravity than cellulose, a pulp fiber having a relatively low hemicellulose content (pulp fiber having a relatively high cellulose content) tends to have a relatively high specific gravity than a pulp fiber having a relatively high hemicellulose content (pulp fiber having a relatively low cellulose content). Meanwhile, in a solution, the ozone-containing gas rises while consuming ozone, and accordingly, the ozone-containing gas existing at the lower position has a higher ozone content than the ozone-containing gas existing at an upper position (that is, it tends to be fresh).

The production method described above includes the predetermined provision step, pulp fiber-containing material supply step, ozone-containing gas supply step, recycled pulp fiber forming step, and treatment liquid discharge step. In the recycled pulp fiber forming step, the pulp fiber-containing material and the ozone-containing gas are brought into contact with each other while raising the ozone-containing gas.

In the production method described above, the pulp fiber having a relatively low hemicellulose content (pulp fiber having a relatively high cellulose content) has relatively high sedimentation properties (or relatively low floating properties) than the pulp fiber having a relatively high hemicellulose content (pulp fiber having a relatively low cellulose content), and the fresh ozone-containing gas comes into contact with the pulp fiber having a relatively low hemicellulose content to easily further decompose the hemicellulose contained therein. Accordingly, the production method described above can produce a recycled pulp fiber that can be suitably used as a cellulose raw material.

In general, the higher the lignin content of pulp fiber, the lower the specific gravity tends to be. Therefore, in the production method described above, the pulp fiber having a relatively low lignin content has a relatively high sedimentation properties than the pulp fiber having a relatively high lignin content, and accordingly, the fresher ozone-containing gas can come into contact with the pulp fiber having a relatively high lignin content to further decompose the lignin contained therein.

The ozone-containing gas supply port means a lower position of the treatment tank, specifically, a range of preferably 30%, more preferably 20%, and even more preferably 10% of a height of the treatment tank from a bottom of the treatment tank. In addition, the pulp fiber-containing material supply port may be disposed at a lower side or an upper side of the ozone-containing gas supply port, and the treatment liquid discharge port may be disposed at a lower side or an upper side of the ozone-containing gas supply port.

The production method according to the aspect A3 includes both so-called continuous production method and batch production method. In addition, the "rising the ozone-containing gas" means that the ozone-containing gas is raising as a whole, and includes the raising of the ozone-containing gas as a whole in a vertical direction while being stirred in a horizontal direction, when the treatment liquid in the treatment tank is stirred.

### [Aspect A4]

The method according to the aspect A3, wherein the treatment liquid discharge port is disposed on a lower side of the pulp fiber-containing material supply port, and in the recycled pulp fiber forming step, the pulp fiber-containing material is brought into contact with the ozone-containing gas while lowering the pulp fiber-containing material.

In the production method described above, since the falling pulp fiber-containing material is brought into contact with the raising ozone-containing gas, the frequency of contact of the pulp fiber-containing material with the ozone-containing gas increases, and the distribution of the hemicellulose content of the recycled pulp fiber contained in the treatment liquid is narrowed (less variation). In addition, since the fresh ozone-containing gas can come into contact with the pulp fiber having a relatively low hemicellulose content, the hemicellulose content of the recycled pulp fiber contained in the treatment liquid tends to be low. In addition, since the treatment liquid discharge port is disposed on a lower side of the pulp fiber-containing material supply port, the pulp fiber having a relatively low hemicellulose content (pulp fiber having a relatively high cellulose content) is easily discharged from the treatment liquid discharge port.

The production method according to the aspect A4 includes both so-called continuous production method and batch production method. In addition, the "lowering the pulp fiber-containing material" means that at least a part of the pulp fiber-containing material is lowered, for example, the entirety thereof when the entire treatment liquid in the treatment tank is lowered and a part of the pulp fiber-containing material lowering when the treatment liquid in the treatment tank is convected vertically may be included.

### [Aspect A5]

The method according to the aspect A3, wherein the treatment liquid discharge port is disposed on an upper side of the pulp fiber-containing material supply port, and in the recycled pulp fiber forming step, the pulp fiber-containing material is brought into contact with the ozone-containing gas while raising the pulp fiber-containing material.

In the production method described above, the raising pulp fiber-containing material is brought into contact with the raising ozone-containing gas, and accordingly, the pulp fiber-containing material is in contact with the ozone-containing gas for a long time, and the hemicellulose content in the pulp fiber is lowered.

The production method according to the aspect A3 includes both so-called continuous production method and batch production method. In addition, the "rising the pulp fiber-containing material" means that at least a part of the pulp fiber-containing material rises, for example, the entirety thereof when the entire treatment liquid in the treatment tank rises and a part of the pulp fiber-containing material raising when the treatment liquid in the treatment tank is convected vertically may be included.

### [Aspect A6]

The method according to any one of the aspects A3 to A5 wherein, in the pulp fiber-containing material supply step, the pulp fiber-containing material is continuously supplied from the pulp fiber-containing material supply port to the treatment tank at a first flow rate, and in the treatment liquid discharge step, the treatment liquid is continuously discharged from the treatment liquid discharge port at a second flow rate.

In the production method described above, the pulp fiber-containing material is continuously supplied from the pulp fiber-containing material supply port to the treatment tank at the first flow rate in the pulp fiber-containing material supply step, and the treatment liquid is continuously discharged from the treatment liquid discharge port at the second flow rate in the treatment liquid discharge step, and accordingly, the treatment time of the pulp fiber-containing material to be treated is uniform, and the distribution of the hemicellulose content of the recycled pulp fiber contained in the treatment liquid is narrowed (variation is reduced). Accordingly, the production method described above can produce a recycled pulp fiber that can be suitably used as a cellulose raw material.

### [Aspect A7]

The method according to any one of the aspect A3 to A6, wherein the used sanitary product contains a super absorbent polymer, the pulp fiber-containing material in the pulp fiber-containing material supply step and the recycled pulp fiber forming step further contains the super absorbent polymer, and at least a part of the super absorbent polymer is dissolved in the treatment liquid in the recycled pulp fiber forming step.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure.

In the production method described above, the recycled pulp fiber forming step, the pulp fiber-containing material and the ozone-containing gas are brought into contact with each other while raising the ozone-containing gas. In the free super absorbent polymer, the free pulp fiber, and the coupling structure, the free super absorbent polymers and coupling structure having a relatively low buoyancy tends to have higher sedimentation properties than the free pulp fiber having a relatively high buoyancy. Meanwhile, the ozone-containing gas rises while consuming ozone and treating the pulp fiber-containing material, and accordingly, the ozone-containing gas existing at the lower position has a higher ozone content than the ozone-containing gas existing at an upper position (that is, it tends to be fresh).

Therefore, in the production method described above, the free super absorbent polymer and the super absorbent polymer in the coupling structure having a relatively high sedimentation properties are accurately oxidatively decomposed by the fresher ozone-containing gas to separate the pulp fiber configured the coupling structure, and the free pulp fiber having a relatively low sedimentation properties and relatively taking a period of time until arriving the treatment liquid discharge port can be treated by the ozone-containing gas by taking time to decompose hemicellulose contained in the free pulp fiber.

In addition, the pulp fiber having a relatively low hemicellulose content (pulp fiber having a relatively high cellulose content) has higher sedimentation properties than the pulp fiber having a relatively high hemicellulose content (pulp fiber having a relatively low cellulose content), and in the production method described above, the fresher ozone-containing gas comes into contact with the pulp fiber having a relatively low hemicellulose content to further decompose the hemicellulose contained therein. Accordingly, the production method described above can produce a recycled pulp fiber that can be suitably used as a cellulose raw material.

### [Aspect A8]

The method according to the aspect A7, wherein the treatment liquid is acidic, weakly acidic, or neutral. In the production method described above, the treatment liquid is acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). Accordingly, the super absorbent polymer to be treated can be inactivated by acid, or if the super absorbent polymer to be treated is already inactivated, the super absorbent polymer can be continuously maintained in the inactivated state. As a result, even when the super absorbent polymer and the pulp fiber form the coupling structure, the ozone in the ozone-containing gas can remove the super absorbent polymer constituting the coupling structure, and the ozone in the ozone-containing gas can act on the pulp fiber constituting the coupling structure to decrease the hemicellulose content of the pulp fiber. Accordingly, the production method described above can produce a recycled pulp fiber that can be suitably used as a cellulose raw material.

### [Aspect A9]

The method according to the aspect A7 or A8, further including an inactivation step of inactivating the super absorbent polymer with an acid before the pulp fiber-containing material supply step.

Since the production method described above further includes the predetermined inactivation step, even when the super absorbent polymer and the pulp fiber form the coupling structure, the ozone in the ozone-containing gas can remove the super absorbent polymer constituting the coupling structure immediately after the pulp fiber-containing material containing the super absorbent polymer and the pulp fiber derived from the used sanitary product is supplied to the treatment tank, and the ozone in the ozone-containing gas can act on the pulp fiber constituting the coupling structure to decrease the hemicellulose content of the pulp fiber. Accordingly, the production method described above can produce a recycled pulp fiber that can be suitably used as a cellulose raw material.

### [Aspect A10]

The method according to the aspect A8, wherein the acid is an acid capable of forming a complex with a metal ion contained in excrement.

In the production method described above, since the acid is an acid capable of forming a complex with a metal ion contained in excrement, the produced recycled pulp fiber is less likely to contain the metal ions. Accordingly, from recycled pulp fiber, in the step of using the recycled pulp fiber, metal ions and their precipitates are less likely to damage the equipment used in the step of using the recycled pulp fiber, and are less likely to disturb the miniaturization of the recycled pulp fiber.

### [Aspect A11]

The method according to any one of the aspects A1 to A10, wherein, in the recycled pulp fiber forming step, the ozone-containing gas is supplied as microbubbles or nanobubbles.

In the production method described above, in the recycled pulp fiber forming step, the ozone-containing gas is supplied as microbubbles or nanobubbles from the ozone-containing gas supply port, and accordingly the microbubbles or nanobubbles apply buoyancy to the pulp fiber-containing material and decrease sedimentation properties of the pulp fiber-containing material. Therefore, it takes a long time for the pulp fiber-containing material to arrive the treatment liquid discharge port, the pulp fiber can be sufficiently treated with ozone, and hemicellulose can be removed from the pulp fiber. Accordingly, the production method described above can produce a recycled pulp fiber that can be suitably used as a cellulose raw material.

### [Aspect A12]

The method according to any one of the aspects A1 to A9, wherein the recycled pulp fiber is a raw material for a cellulose nanofiber, a viscose rayon, a cellulose derivative, a bioethanol, a molding material, or a processed paper product, wherein the cellulose derivative is selected from a group consisting of a semi-synthetic cellulose fiber, carboxymethyl cellulose, hydroxyethyl cellulose and hydroxypropyl cellulose.

In the production method described above, the recycled pulp fiber is a predetermined raw material. Accordingly, the production method described above can produce a recycled pulp fiber that can be suitably used as a predetermined cellulose raw material.

### [Aspect A13]

The method according to any one of the aspects A1 to A12, further including a cellulose use step of forming a cellulose nanofiber, a viscose rayon, a cellulose derivative, a bioethanol, a molding material, or a processed paper product from the recycled pulp fiber, wherein the cellulose derivative is selected from the group consisting of a semi-synthetic cellulose fiber, carboxymethyl cellulose, hydroxyethyl cellulose and hydroxypropyl cellulose.

The production method described above includes the predetermined cellulose use step, and a predetermined cellulose-derived product (cellulose nanofiber, viscose rayon, cellulose derivative, bioethanol, molding material, or processed paper product) can be efficiently produced, wherein the cellulose derivative is selected from the group consisting of a semi-synthetic cellulose fiber, carboxymethyl cellulose, hydroxyethyl cellulose and hydroxypropyl cellulose.

### [Aspect A14]

A recycled pulp fiber derived from a used sanitary product containing a pulp fiber, wherein the recycled pulp fiber has a hemicellulose content of less than 8.0mass%. The recycled pulp fiber is obtained according to the method of any one of aspects A1 to A13.

Since the recycled pulp fiber has the predetermined hemicellulose content, it is suitable as a cellulose raw material.

In the recycled pulp fiber according to the aspect A14, the recycled pulp fiber has a lignin content of less than 0.10mass%. Since the recycled pulp fiber has the predetermined lignin content, it is suitable as a raw material for cellulose.

### [Aspect A15]

The recycled pulp fiber according to the aspect A14, wherein the recycled pulp fiber is a raw material for a cellulose nanofiber, a viscose rayon, a cellulose derivative, a bioethanol, a molding material, or a processed paper product. The recycled pulp fiber is suitable as a predetermined cellulose raw material.

### [Aspect A16]

A cellulose nanofiber, a viscose rayon, a cellulose derivative, a bioethanol, a molding material, or a processed paper product, wherein the recycled pulp fiber according to any one of the aspects A14 to A15 is used as a raw material. The cellulose nanofiber, the viscose rayon, the cellulose derivative, the molding material, or the processed paper product has a high cellulose content. The bioethanol has a high ethanol content.

### [Aspect A17]

A use of ozone for reducing a hemicellulose content of a recycled pulp fiber derived from a used sanitary product containing a pulp fiber. The use described above can reduce the hemicellulose content in recycled pulp fiber using ozone.

### [Aspect A18]

The use according to the aspect A17, wherein the recycled pulp fiber has a hemicellulose content of less than 8.0mass%. The use described above can form a recycled pulp fiber suitable as a cellulose raw material.

The present disclosure includes the following aspects B.

### [Aspect B1]

A method of producing a pulp fiber for a culture medium as a culture medium for cellulase-producing microorganism from a pulp fiber to be treated, the method including a pulp fiber for a culture medium forming step of forming the pulp fiber for a culture medium having a hemicellulose content of less than 8.0mass% from the pulp fiber to be treated, by supplying an ozone-containing gas to a treatment tank containing a treatment liquid containing a pulp fiber-containing material containing the pulp fiber to be treated.

In the production method described above, a pulp fiber for a culture medium having a hemicellulose content of less than 8.0mass% can be produced from the pulp fibers to be treated. Accordingly, the production method described above can produce a pulp fiber for a culture medium having excellent cellulase productivity using cellulase-producing microorganism.

In the pulp fiber for a culture medium forming step, the pulp fiber for a culture medium is formed by bringing the ozone-containing gas into contact with the pulp fiber-containing material so that a CT value, which is a product of an ozone concentration and a treatment time, is 8,000 to 11,000 ppm·min.

In the production method described above, in the pulp fiber for a culture medium forming step, the pulp fiber for a culture medium is formed by bringing the ozone-containing gas into contact with the pulp fiber-containing material under predetermined conditions. Accordingly, in the production method described above, the pulp fiber for a culture medium having a predetermined lignin content can be easily produced from the pulp fiber.

### [Aspect B2]

The method according to aspect B1, wherein the pulp fiber for a culture medium has a lignin content of 0.10mass% or less.

It is known that pulp fiber contains lignin, in addition to cellulose. For example, it is known that the coniferous trees, which are often used in sanitary products, contain 20mass% to 30mass% of lignin. In addition, in a case where the pulp fiber is used as a culture medium for cellulase-producing microorganism, when the lignin present in the pulp fiber disturbs the functions of a culture medium for cellulase-producing microorganism, for example, the cellulase productivity of the cellulase-producing microorganism may be lowered.

In the production method described above, pulp fibers for a culture medium having a lignin content of 0.10mass% or less can be produced from pulp fibers contained in a used sanitary product. Accordingly, the production method described above can produce a pulp fiber for a culture medium having excellent cellulase productivity using cellulase-producing microorganism.

### [Aspect B3]

The method according to the aspect B1 or B2, wherein the pulp fiber for a culture medium has an ash content of 0.65mass% or less. The ash content tends to disturb the saccharification of cellulose. Since the pulp fiber for a culture medium has the predetermined ash content, it is difficult for the ash content to be mixed into the cellulase produced using the culture medium for cellulase-producing microorganism containing the pulp fiber for a culture medium, and it is difficult to disturb the saccharification of cellulose using the cellulase.

### [Aspect B4]

The method according to any one of the aspects B1 to B3, wherein bacteria are not detected in the pulp fiber for a culture medium by a pour culture method and/or a plate culture method. In the production method described above, the bacteria are not detected in the pulp fibers for a culture medium by the pour culture method and/or the plate culture method, and accordingly, when the pulp fiber for a culture medium are used as the culture medium for cellulase-producing microorganism, the production of cellulase by the cellulase-producing microorganism is less likely to be disturbed.

### [Aspect B5]

The method according to any one of the aspects B1 to B4, wherein the method further comprises a provision step of providing the treatment tank including a pulp fiber-containing material supply port, a treatment liquid discharge port, and an ozone-containing gas supply port disposed at a lower position of the treatment tank, a pulp fiber-containing material supply step of supplying the pulp fiber-containing material to the treatment tank from the pulp fiber-containing material supply port, an ozone-containing gas supply step of supplying the ozone-containing gas to the treatment liquid in the treatment tank from the ozone-containing gas supply port, the pulp fiber for a culture medium forming step of forming the pulp fiber for a culture medium from the pulp fiber to be treated, by bringing the pulp fiber-containing material into contact with the ozone-containing gas while raising the ozone-containing gas in the treatment tank, and a treatment liquid discharge step of discharging the treatment liquid containing the pulp fiber for a culture medium from the treatment liquid discharge port.

Since the hemicellulose has a lower specific gravity than cellulose, a pulp fiber having a relatively low hemicellulose content (pulp fiber having a relatively high cellulose content) tends to have a relatively high specific gravity than a pulp fiber having a relatively high hemicellulose content (pulp fiber having a relatively low cellulose content). Meanwhile, in a solution, the ozone-containing gas rises while consuming ozone, and accordingly, the ozone-containing gas existing at the lower position has a higher ozone content than the ozone-containing gas existing at an upper position (that is, it tends to be fresh).

The production method described above includes the predetermined provision step, pulp fiber-containing material supply step, ozone-containing gas supply step, pulp fiber for a culture medium forming step, and treatment liquid discharge step. In the pulp fiber for a culture medium forming step, the pulp fiber-containing material and the ozone-containing gas are brought into contact with each other while raising the ozone-containing gas.

In the production method described above, the pulp fiber having a relatively low hemicellulose content (pulp fiber having a relatively high cellulose content) has high sedimentation properties than the pulp fiber having a relatively high hemicellulose content (pulp fiber having a relatively low cellulose content), and the pulp fiber having a relatively low hemicellulose content (pulp fiber having a relatively high cellulose content) is easily discharged from the treatment liquid discharge port. In addition, the fresh ozone-containing gas comes into contact with the pulp fiber having a relatively low hemicellulose content, and the hemicellulose contained therein is easily further decomposed. Accordingly, the production method described above can produce a pulp fiber for a culture medium having excellent cellulase productivity using cellulase-producing microorganism.

In general, the higher the lignin content of pulp fiber, the lower the specific gravity tends to be. Therefore, in the production method described above, the pulp fiber having a relatively low lignin content has a relatively high sedimentation properties than the pulp fiber having a relatively high lignin content, and accordingly, the fresher ozone-containing gas can come into contact with the pulp fiber having a relatively low lignin content to further decompose the lignin contained therein.

The ozone-containing gas supply port means a lower position of the treatment tank, specifically, a range of preferably 30%, more preferably 20%, and even more preferably 10% of a height of the treatment tank from a bottom of the treatment tank. In addition, the pulp fiber-containing material supply port may be disposed at a lower side or an upper side of the ozone-containing gas supply port, and the treatment liquid discharge port may be disposed at a lower side or an upper side of the ozone-containing gas supply port.

### [Aspect B6]

The method according to the aspect B5, wherein the treatment liquid discharge port is disposed on a lower side of the pulp fiber-containing material supply port, and in the pulp fiber for a culture medium forming step, the pulp fiber-containing material is brought into contact with the ozone-containing gas while lowering the pulp fiber-containing material.

In the production method described above, since the falling pulp fiber-containing material is brought into contact with the raising ozone-containing gas, the frequency of contact of the pulp fiber-containing material with the ozone-containing gas increases, and the distribution of the hemicellulose content of the pulp fiber contained in the treatment liquid (pulp fiber after ozone treatment) is narrowed (less variation). In addition, since the fresh ozone-containing gas can come into contact with the pulp fiber having a relatively low hemicellulose content, the hemicellulose content of the pulp fiber contained in the treatment liquid (pulp fiber after ozone treatment) tends to be low. In addition, since the treatment liquid discharge port is disposed on a lower side of the pulp fiber-containing material supply port, the pulp fiber having a relatively low hemicellulose content (pulp fiber having a relatively high cellulose content) is easily discharged from the treatment liquid discharge port.

The production method according to the aspect B6 includes both so-called continuous production method and batch production method. In addition, the "lowering the pulp fiber-containing material" means that at least a part of the pulp fiber-containing material is lowered, for example, the entirety thereof when the entire treatment liquid in the treatment tank is lowered and a part of the pulp fiber-containing material lowering when the treatment liquid in the treatment tank is convected vertically may be included.

### [Aspect B7]

The method according to the aspect B5, wherein the treatment liquid discharge port is disposed on an upper side of the pulp fiber-containing material supply port, and in the pulp fiber for a culture medium forming step, the pulp fiber-containing material is brought into contact with the ozone-containing gas while raising the pulp fiber-containing material.

In the production method described above, the raising pulp fiber-containing material is brought into contact with the raising ozone-containing gas, and accordingly, the pulp fiber-containing material is in contact with the ozone-containing gas for a long time, and the hemicellulose content in the pulp fiber is lowered.

The production method according to the aspect B7 includes both so-called continuous production method and batch production method. In addition, the "rising the pulp fiber-containing material" means that at least a part of the pulp fiber-containing material rises, for example, the entirety thereof when the entire treatment liquid in the treatment tank rises and a part of the pulp fiber-containing material raising when the treatment liquid in the treatment tank is convected vertically may be included.

### [Aspect B8]

The method according to any one of the aspects B5 to B7 wherein, in the pulp fiber-containing material supply step, the pulp fiber-containing material is continuously supplied from the pulp fiber-containing material supply port to the treatment tank at a first flow rate, and in the treatment liquid discharge step, the treatment liquid is continuously discharged from the treatment liquid discharge port at a second flow rate.

In the production method described above, the pulp fiber-containing material is continuously supplied from the pulp fiber-containing material supply port to the treatment tank at the first flow rate in the pulp fiber-containing material supply step, and the treatment liquid is continuously discharged from the treatment liquid discharge port at the second flow rate in the treatment liquid discharge step, and accordingly, the treatment time of the pulp fiber-containing material to be treated is uniform, and the distribution of the hemicellulose content of the pulp fiber for a culture medium contained in the treatment liquid is narrowed (variation is reduced). Accordingly, the production method described above can produce a pulp fiber for a culture medium having excellent cellulase productivity using cellulase-producing microorganism.

### [Aspect B9]

The method according to any one of the aspects B5 to B8, wherein the pulp fiber-containing material contains the pulp fiber to be treated derived from a used sanitary product and the super absorbent polymer, and at least a part of the super absorbent polymer is dissolved in the treatment liquid in the pulp fiber for a culture medium forming step.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure.

In the production method described above, the pulp fiber for a culture medium forming step, the pulp fiber-containing material and the ozone-containing gas are brought into contact with each other while raising the ozone-containing gas. In the free super absorbent polymer, the free pulp fiber, and the coupling structure, the free super absorbent polymers and coupling structure having a relatively low buoyancy tends to have higher sedimentation properties than the free pulp fiber having a relatively high buoyancy. Meanwhile, the ozone-containing gas rises while consuming ozone and treating the pulp fiber-containing material, and accordingly, the ozone-containing gas existing at the lower position has a higher ozone content than the ozone-containing gas existing at an upper position (that is, it tends to be fresh).

Therefore, in the production method described above, the free super absorbent polymer and the super absorbent polymer in the coupling structure having a relatively high sedimentation properties are accurately oxidatively decomposed by the fresher ozone-containing gas to separate the pulp fiber configured the coupling structure, and the free pulp fiber having a relatively low sedimentation properties and relatively taking a period of time until arriving the treatment liquid discharge port can be treated by the ozone-containing gas by taking time to decompose hemicellulose contained in the free pulp fiber.

In addition, the pulp fiber having a relatively low hemicellulose content (pulp fiber having a relatively high cellulose content) has higher sedimentation properties than the pulp fiber having a relatively high hemicellulose content (pulp fiber having a relatively low cellulose content), and in the production method described above, the fresher ozone-containing gas comes into contact with the pulp fiber having a relatively low hemicellulose content to further decompose the hemicellulose contained therein. Accordingly, the production method described above can produce a pulp fiber for a culture medium having excellent cellulase productivity using cellulase-producing microorganism.

### [Aspect B 10]

The method according to the aspect B9, wherein the treatment liquid is acidic, weakly acidic, or neutral. In the production method described above, the treatment liquid is acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). Accordingly, the super absorbent polymer to be treated can be inactivated by acid, or if the super absorbent polymer to be treated is already inactivated, the super absorbent polymer can be continuously maintained in the inactivated state. As a result, even when the super absorbent polymer and the pulp fiber form the coupling structure, the ozone in the ozone-containing gas can remove the super absorbent polymer constituting the coupling structure, and the ozone in the ozone-containing gas can act on the pulp fiber constituting the coupling structure to decrease the hemicellulose content of the pulp fiber. Accordingly, the production method described above can produce a pulp fiber for a culture medium having excellent cellulase productivity using cellulase-producing microorganism.

### [Aspect B11]

The method according to the aspect B9 or B10, further including an inactivation step of inactivating the super absorbent polymer with an acid before the pulp fiber-containing material supply step.

Since the production method described above further includes the predetermined inactivation step, even when the super absorbent polymer and the pulp fiber form the coupling structure, the ozone in the ozone-containing gas can remove the super absorbent polymer constituting the coupling structure immediately after the pulp fiber-containing material containing the super absorbent polymer and the pulp fiber derived from the used sanitary product is supplied to the treatment tank, and the ozone in the ozone-containing gas can act on the pulp fiber constituting the coupling structure to decrease the hemicellulose content of the pulp fiber. Accordingly, the production method described above can produce a pulp fiber for a culture medium having excellent cellulase productivity using cellulase-producing microorganism.

### [Aspect B12]

The method according to the aspect B11, wherein the acid is an acid capable of forming a complex with a metal ion contained in excrement.

In the production method described above, since the acid is an acid capable of forming a complex with a metal ion contained in excrement, the produced pulp fiber for a culture medium is less likely to contain the metal ions. Accordingly, from the pulp fiber for a culture medium, in the step of using the pulp fiber for a culture medium, the metal ions and their precipitates are less likely to damage the equipment used in the step of using the pulp fiber for a culture medium.

### [Aspect B 13]

The method according to any one of the aspect B1 or B2, further including a cellulase generation step of generating cellulase using the pulp fiber for a culture medium after the pulp fiber for a culture medium forming step. In the production method described above, cellulase can be efficiently produced using the pulp fiber for a culture medium.

### [Aspect B14]

A recycled pulp fiber for a culture medium derived from a used sanitary product containing a pulp fiber as a culture medium for cellulase-producing microorganism, wherein the pulp fiber for a culture medium has a hemicellulose content of less than 8.0mass%. The recycled pulp fiber is obtained according to the method of any one of aspects B 1 to B13.

Since the pulp fiber for a culture medium has the predetermined hemicellulose content, the productivity of cellulase using cellulase-producing microorganism is excellent.

In the pulp fiber for a culture medium according to aspect B14, the pulp fiber for a culture medium has a lignin content of less than 0.10mass%. Since the pulp fiber for a culture medium has the predetermined lignin content, the productivity of cellulase using cellulase-producing microorganism is excellent.

### [Aspect B 15]

The pulp fiber for a culture medium according to aspect B 14, wherein the pulp fiber for a culture medium has an ash content of 0.65mass% or less. Since the pulp fiber for a culture medium has the predetermined ash content, it is difficult for the ash content to be mixed into the cellulase produced using the culture medium for cellulase-producing microorganism containing the pulp fiber for a culture medium, and it is difficult to disturb the saccharification of cellulose using the cellulase.

### [Aspect B 16]

The pulp fiber for a culture medium according to any one of the aspects B14 to B15, wherein bacteria are not detected in the pulp fiber for a culture medium by a pour culture method and/or a plate culture method.

The bacteria are not detected in the pulp fibers for a culture medium by the pour culture method and/or the plate culture method, and accordingly, when the pulp fiber for a culture medium are used as the culture medium for cellulase-producing microorganism, the production of cellulase by the cellulase-producing microorganism is less likely to be disturbed.

### [Aspect B17]

Use of pulp fiber for a culture medium according to aspects B 14 to B 16 as a culture medium for cellulase-producing microorganism for production of cellulase, wherein the pulp fiber for a culture medium is derived from a used sanitary product containing a pulp fiber, and pulp fiber for a culture medium has a hemicellulose content of less than 8.0mass%.

In the use, the pulp fiber for a culture medium has the predetermined hemicellulose content, and accordingly, the productivity of cellulase using cellulase-producing microorganism is excellent.

### [Aspect B19]

The use according to aspect B18, wherein the pulp fiber for a culture medium has a lignin content of 0.10mass% or less. In the use, the pulp fiber for a culture medium has the predetermined lignin content, and accordingly, the productivity of cellulase using cellulase-producing microorganism is excellent.

### EXAMPLES

[Production Example A1]A recycled pulp fiber was produced from a plurality of types of used disposable diapers collected from nursing facility according to the methods shown in Figs. 1 and 2. The conditions related to the ozone treatment step S36 were as follows.
(i) Pulp fiber-containing material 51
   · Concentration: 1mass% (concentration of pulp fiber and super absorbent polymer)
   · pH: 2.4
(ii) Treatment tank 31
   · Capacity: 60L
   · Height: 2.6m
   · First flow rate: 2 L/min
   · Second flow rate: 2 L/min
   · In-tank treatment time: 30 minutes
   · V/W: 100
   · R_{O}/V: 0.033
(iii) Ozone-containing gas
   · Ozone concentration: 200 g/m³
   · Shape: Nanobubbles

The inactivation step S31 was carried out with a citric acid having a pH of 2.0, the ozone treatment step S36 was carried out under the conditions described above, and the obtained recycled pulp fiber was dried at 120°C for 60 minutes to obtain a recycled pulp fiber No. 1.

### [Reference Production Example A1]

A recycled pulp fiber No. 2 was obtained in the same manner as in the production example A1, except that the in-tank treatment time was changed to 15 minutes.

### [Comparative Production Example A1]

NBKP virgin pulp fiber was used as a recycled pulp fiber No. 3.

### [Example A1, Reference Example A1, and Comparative Example A1]

A cellulose content, a hemicellulose content, a lignin content (mass%), a water contact angle (°), an ash content (mass%), a beating degree reduction rate (mL/h), and a beating degree (mL) after beating for a predetermined period of time in a beating degree reduction test of each of the recycled pulp fibers No. 1 to No. 3 were measured according to the beating degree reduction test disclosed in the present specification. The results are indicated in Table 1.

### [Table 1]

**Table 1**

| Example No. | Example A1 | Reference Example A1 | Comparative Example A1 |
|---|---|---|---|
| Recycled pulp fiber No. | No.1 | No.2 | No.3 |
| Ozone treatment | Performed | Performed | Not performed |
| Cellulose content (mass%) | 92.7 | 89.9 | 89.8 |
| hemicellulose content (mass%) | 7.1 | 10.0 | 10.1 |
| lignin content (mass%) | < 0.10 | < 0.10 | 0.16 |

### [Production Example B1]

A recycled pulp fiber for a culture medium was produced from a plurality of types of used disposable diapers collected from nursing facility according to the methods shown in Figs. 5 and 2. The conditions related to the ozone treatment step S36 were as follows. (i) Pulp fiber-containing material 51
· Concentration: 1mass% (concentration of pulp fiber and super absorbent polymer)
· pH: 2.4
   (ii) Treatment tank 31
· Capacity: 60L
· Height: 2.6m
· First flow rate: 2 L/min
· Second flow rate: 2 L/min
· In-tank treatment time: 30 minutes
· V/W: 100
· R_{O}/V: 0.033
   (iii) Ozone-containing gas
· Ozone concentration: 200 g/m³
· Shape: Nanobubbles

The inactivation step S31 was carried out with a citric acid having a pH of 2.0, the ozone treatment step S36 was carried out under the conditions described above, and the obtained pulp fiber for a culture medium was dried at 120°C for 60 minutes to obtain a pulp fiber for a culture medium No. 1.

### [Reference Production Example B 1]

A pulp fiber for a culture medium No. 2 was obtained in the same manner as in the production example B1, except that the in-tank treatment time was changed to 15 minutes.

### [Comparative Production Example B1]

NBKP virgin pulp fiber was used as a pulp fiber for a culture medium No. 3.

### [Example B 1, Reference Example B 1, and Comparative Example B1]

A cellulose content, a hemicellulose content, a lignin content (mass%), and an ash content (mass%) of each of the pulp fibers for a culture medium No. 1 to No. 3 were measured. The results are indicated in Table 2.

### [Table 2]

**Table2**

| Example No. | Example B1 | Reference Example B1 | Comparative Example B1 |
|---|---|---|---|
| Pulp fiber for culture medium No. | No.1 | No.2 | No.3 |
| Ozone treatment | Performed | Performed | Not performed |
| Cellulose content (mass%) | 92.7 | 89.9 | 89.8 |
| hemicellulose content (mass%) | 7.1 | 10.0 | 10.1 |
| lignin content (mass%) | < 0.10 | < 0.10 | 0.16 |
| Ash content (mass%) | 0.09 | | 0.12 |

### [Production Example B2]

1,400 used disposable diapers in total (approximately 250 kg) collected from a nursing home for the elderly were crushed using a Sumitomo Cutter (manufactured by Sumitomo Heavy Industries Environment Co., Ltd.) as a crushing device to form a crushed material-containing aqueous solution. As the inactivating aqueous solution, approximately 1 ton of 0.16mass% calcium hydroxide aqueous solution was used. The crushed material-containing aqueous solution was introduced into a horizontal washing machine ECO-22B (manufactured by Inamoto Manufacturing Co., Ltd.) as the first separation device to separate the pulp fiber and the super absorbent polymer from the other constituent materials, and an aqueous solution containing the pulp fiber and the super absorbent polymer was formed. Then, the aqueous solution containing the pulp fiber and the super absorbent polymer was passed through a dust collector and then moved to a stirring tank.

A 2mass% of a citric acid aqueous solution was added to the stirring tank so that 1 part by mass of citric acid is added per 1 part by mass of the solid content of the pulp fiber, and the content of the stirring tank was moved to an ozone treatment device, the ozone treatment and ejector treatment were performed to decompose the super absorbent polymer. A part of the content passed through the ozone treatment device was extracted to form an extracted sample. The solid content concentration of the extracted sample was approximately 2mass%. The extracted sample was dehydrated to adjust the solid content concentration thereof to approximately 5mass%.

In the ozone treatment step using the ozone treatment device (twice in total), an ozone concentration in the first time was 200 g/m³ and an ozone supply amount was 100 g/h. In addition, the ozone concentration in the second time was 200 g/m³ and the ozone supply amount was 100 g/h. The extracted sample having the solid content concentration adjusted to approximately 5mass% was subjected to centrifugal separation by using a micro-cooled centrifuge (Model 3740 manufactured by Kubota Shoji Co., Ltd., rotation rate: 12,000 rpm, temperature: 4°C, time: 5 minutes) to form a sample No. 1.

### [Comparative Production Example B2]

Approximately 15 kg of 100 used paper diapers collected from the nursing facility for the elderly were put into a sterilized stirring container, 600 kg of sterilized water was put into the stirring container so that the concentration of the pulp fiber (3 kg) is approximately 5mass%, the content in the container was stirred for 10 minutes, and the aqueous solution in the container was obtained as a sample No. 2.

The number of bacteria of each of the sample No. 1 and the sample No. 2 was measured by the pour culture method and the plate culture method described in the present specification. The results are indicated in Table 3. In addition, the type of main bacterial were identified by a biochemical property inspection method. The results are indicated in Table 3. In Table 3, ND means that it is not detected.

### [Table 3]

**Table3**

| Type of bacteria | Sample No. 1 (extracted sample) | Sample No. 2 |
|---|---|---|
| General viable bacteria (pour culture method) | 0 | 2.04E+11 |
| Bacillus cereus | 0 | |
| | | |
| Enteric bacteria (plate culture method) | ND¹⁾ | 1.12E+11 |
| Escherichia coli | ND | 5.80E+10 |
| Klebsiella oxytoca | ND | 2.60E+10 |
| Citrobacter freundii | ND | 1.33E+10 |
| Klebsiella spp. | ND | 6.58E+09 |
| Klebsiella pneumoniae | ND | 4.97E+09 |
| Enterobacter cloacae | ND | 1.18E+09 |
| Proteus mirabilis | ND | 9.27E+08 |
| Enterobacter spp. | ND | 5.92E+08 |
| Enterobacter aerogenes | ND | 3.95E+08 |
| Morganella morganii | ND | 1.28E+08 |
| Providencia rettgeri | ND | 1.22E+08 |
| | ND | |
| Others | ND | 8.70E+09 |
| Pseudomonas aeruginosa | ND | 5.43E+09 |
| Aeromonas hydrophila | ND | 2.45E+09 |
| GNFR²⁾ | ND | 8.14E+08 |

| | | |
|---|---|---|
| 1) Not detected 2) Glucosenon-fer-mentative gramnegative rods | | |

In a case where it is confirmed by the biochemical property inspection method, most of the general viable bacteria contained in the sample No. 2 were Bacillus cereus, and Bacillus subtilis was also included. Neither Bacillus cereus nor Bacillus subtilis was not detected in the sample No. 1 (extracted sample). From the above, it is found that, by treating the disposable diaper with the ozone-containing gas, it is possible to eliminate the general bacteria in the pour culture method and the enteric bacteria in the plate culture method.

### REFERENCE SIGNS LIST

31 Treatment tank
32 Pulp fiber-containing material supply port
33 Treatment liquid discharge port
43 Ozone-containing gas supply port
51 Pulp fiber-containing material
52 Treatment liquid
53 Ozone-containing gas
S36 Ozone treatment step

## Claims

1. A method of producing a recycled pulp fiber from a pulp fiber to be treated, the method including:
a recycled pulp fiber forming step of forming the recycled pulp fiber having a hemicellulose content of less than 8.0mass% from the pulp fiber to be treated, by supplying an ozone-containing gas (53) to a treatment tank (31) containing a treatment liquid (52) containing a pulp fiber-containing material (51) containing the pulp fiber to be treated,
wherein, in the recycled pulp fiber forming step, the recycled pulp fiber is formed by bringing the ozone-containing gas (53) into contact with the pulp fiber-containing material (51) so that a CT value, which is a product of an ozone concentration and a treatment time, is 8,000 to 11,000 ppm·min.

2. The method according to claim 1,
wherein the recycled pulp fiber has a lignin content of 0.10mass% or less.

3. The method according to claim 1 or 2, further comprising:
a provision step of providing the treatment tank (31) including a pulp fiber-containing material supply port (32), a treatment liquid discharge port (33), and an ozone-containing gas supply port (43) disposed at a lower position of the treatment tank (31);
a pulp fiber-containing material supply step of supplying the pulp fiber-containing material (51) to the treatment tank (31) from the pulp fiber-containing material supply port (32);
an ozone-containing gas (53) supply step of supplying the ozone-containing gas (53) to the treatment liquid (52) in the treatment tank (31) from the ozone-containing gas supply port (43);
the recycled pulp fiber forming step of forming the recycled pulp fiber from the pulp fiber to be treated, by bringing the pulp fiber-containing material (51) into contact with the ozone-containing gas (53) while raising the ozone-containing gas (53) in the treatment tank (31); and
a treatment liquid discharge step of discharging the treatment liquid (52) containing the recycled pulp fiber from the treatment liquid discharge port (33).

4. The method according to claim 3,
wherein the pulp fiber-containing material (51) contains the pulp fiber to be treated and a super absorbent polymer, which are derived from a used sanitary product,
the pulp fiber-containing material (51) in the pulp fiber-containing material supply step and the recycled pulp fiber forming step further contains the super absorbent polymer, and
at least a part of the super absorbent polymer is dissolved in the treatment liquid (52) in the recycled pulp fiber forming step, and optionally
wherein the treatment liquid (52) is acidic, weakly acidic, or neutral.

5. The method according to claim 4, further comprising:
an inactivation step of inactivating the super absorbent polymer with an acid before the pulp fiber-containing material supply step, optionally
wherein the acid is an acid capable of forming a complex with a metal ion contained in excrement.

6. The method according to any one of claims 1 to 5, further comprising:
a cellulose use step of forming a cellulose nanofiber, a viscose rayon, a cellulose derivative, a bioethanol, a molding material, or a processed paper product from the recycled pulp fiber, or of using the recycled pulp fiber as a pulp fiber for a culture medium as a culture medium for cellulase-producing microorganism, and optionally wherein the recycled pulp fiber is used as a pulp fiber for a culture medium, and bacteria are not detected in the pulp fiber for a culture medium by a pour culture method and/or a plate culture method, as described in the description,
wherein the cellulose derivative is selected from a group consisting of a semi-synthetic cellulose fiber, carboxymethyl cellulose, hydroxyethyl cellulose and hydroxypropyl cellulose.

7. The method according to claim 6, wherein the recycled pulp fiber is used as the pulp fiber for a culture medium, and the method further comprises a cellulase generation step of generating cellulase using the pulp fiber for a culture medium after the recycled pulp fiber forming step.

8. A recycled pulp fiber derived from a used sanitary product containing a pulp fiber, wherein the recycled pulp fiber has a hemicellulose content of less than 8.0mass%, and
wherein the recycled pulp fiber has a lignin content of less than 0.10mass%,
and wherein the recycled pulp fiber derived from a used sanitary product containing a pulp fiber is obtained according to the method of any one of claims 1 to 7.

9. The recycled pulp fiber according to claim 8,
wherein the recycled pulp fiber is a pulp fiber for a culture medium as a culture medium for cellulase-producing microorganism, and bacteria are not detected in the pulp fiber for a culture medium by a pour culture method and/or a plate culture method, as described in the description, and/or
wherein the recycled pulp fiber is the pulp fiber for a culture medium, and the pulp fiber for a culture medium contains an ash content of 0.65mass% or less.

10. Use of the recycled pulp fiber according to claim 8 as a raw material for producing a cellulose nanofiber, a viscose rayon, a cellulose derivative, a bioethanol, a molding material, or a processed paper product,
wherein the cellulose derivative is selected from a group consisting of a semi-synthetic cellulose fiber, carboxymethyl cellulose, hydroxyethyl cellulose and hydroxypropyl cellulose.

11. A culture medium for cellulase-producing microorganism, comprising a recycled pulp fiber according to claim 8 or 9.

12. The culture medium according to claim 11, wherein bacteria are not detected in the pulp fiber for a culture medium by a pour culture method and/or a plate culture method, as described in the description, and/or
wherein the pulp fiber for a culture medium contains an ash content of 0.65mass% or less.

13. A use of ozone for reducing a hemicellulose content of a recycled pulp fiber derived from a used sanitary product containing a pulp fiber.

14. The use according to claim 13,
wherein the recycled pulp fiber has a hemicellulose content of less than 8.0mass%.

## Patentansprüche

1. Verfahren zur Herstellung einer recycelten Zellstofffaser aus einer zu behandelnden Zellstofffaser, wobei das Verfahren Folgendes einschließt:
einen Bildungsschritt für recycelte Zellstofffaser des Bildens der recycelten Zellstofffaser, die einen Hemicellulose-Gehalt von weniger als 8,0 Masse-% aufweist, aus der zu behandelnden Zellstofffaser durch Zuführen eines ozonhaltigen Gases (53) zu einem Behandlungstank (31), der eine Behandlungsflüssigkeit (52) enthält, die ein Zellstofffaser-haltiges Material (51) enthält, das die zu behandelnde Zellstofffaser enthält,
wobei in dem Bildungsschritt für recycelte Zellstofffaser die recycelte Zellstofffaser durch Inkontaktbringen des ozonhaltigen Gases (53) mit dem Zellstofffaser-haltigen Material (51) gebildet wird, sodass ein CT-Wert, der ein Produkt einer Ozonkonzentration und einer Behandlungszeit ist, 8 000 bis 11 000 ppm·min beträgt.

2. Verfahren nach Anspruch 1,
wobei die recycelte Zellstofffaser einen Lignin-Gehalt von 0,10 Masse-% oder weniger aufweist.

3. Verfahren nach Anspruch 1 oder 2, das weiter Folgendes umfasst:
einen Bereitstellungsschritt zur Bereitstellung des Behandlungstanks (31), der Folgendes einschließt: einen Zuführungsanschluss für Zellstofffaser-haltiges Material (32), einen Auslassanschluss für Behandlungsflüssigkeit (33) und einen Zuführungsanschluss für ozonhaltiges Gas (43), der an einer unteren Position des Behandlungstanks (31) angeordnet ist;
einen Zuführungsschritt für Zellstoff-haltiges Material zur Zuführung des Zellstoffhaltigen Materials (51) zu dem Behandlungstank (31) aus dem Zuführungsanschluss für Zellstoff-haltiges Material (32);
einen Zuführungsschritt für ozonhaltiges Gas (53) zur Zuführung des ozonhaltigen Gases (53) zu der Behandlungsflüssigkeit (52) in dem Behandlungstank (31) aus dem Zuführungsanschluss für ozonhaltiges Gas (43);
den Bildungsschritt für recycelte Zellstofffaser des Bildens der recycelten Zellstofffaser aus der zu behandelnden Zellstofffaser durch Inkontaktbringen des Zellstofffaser-haltigen Materials (51) mit dem ozonhaltigen Gas (53) während des Aufsteigens des ozonhaltigen Gases (53) in dem Behandlungstank (31); und
einen Auslassschritt für Behandlungsflüssigkeit des Auslassens der Behandlungsflüssigkeit (52), die die recycelte Zellstofffaser enthält, aus dem Auslassanschluss für Behandlungsflüssigkeit (33).

4. Verfahren nach Anspruch 3,
wobei das Zellstofffaser-haltige Material (51) die zu behandelnde Zellstofffaser und ein superabsorbierendes Polymer enthält, die aus einem benutzten Hygieneartikel stammen, das Zellstofffaser-haltige Material (51) in dem Zuführungsschritt für Zellstoff-haltiges Material und Bildungsschritt für recycelte Zellstofffaser weiter das superabsorbierende Polymer enthält und
zumindest ein Teil des superabsorbierenden Polymers in der Behandlungsflüssigkeit (52) in dem Bildungsschritt für recycelte Zellstofffaser gelöst wird und optional wobei die Behandlungsflüssigkeit (52) sauer, schwach sauer oder neutral ist.

5. Verfahren nach Anspruch 4, das weiter Folgendes umfasst:
einen Inaktivierungsschritt des Inaktivierens des superabsorbierenden Polymers mit einer Säure vor dem Zuführungsschritt für Zellstoff-haltiges Material, optional wobei die Säure eine Säure ist, die mit einem Metallion, das in Ausscheidungen enthalten ist, einen Komplex bilden kann.

6. Verfahren nach einem der Ansprüche 1 bis 5, das weiter Folgendes umfasst:
einen Celluloseverwendungsschritt des Bildens einer Cellulose-Nanofaser, einer Viskosefaser, eines Cellulosederivats, eines Bioethanols, eines Formmaterial oder eines verarbeiteten Papierprodukts aus der recycelten Zellstofffaser oder des Verwendens der recycelten Zellstofffaser als eine Zellstofffaser für ein Kulturmedium als ein Kulturmedium für einen Cellulase-produzierenden Mikroorganismus, und optional wobei die recycelte Zellstofffaser als eine Zellstofffaser für ein Kulturmedium verwendet wird, und Bakterien in der Zellstofffaser für ein Kulturmedium durch ein Gusskulturverfahren und/oder ein Plattenkulturverfahren, wie in der Beschreibung beschrieben, nicht nachgewiesen werden,
wobei das Cellulosederivat aus einer Gruppe ausgewählt ist, die aus einer halbsynthetischen Cellulosefaser, Carboxymethylcellulose, Hydroxyethylcellulose und Hydroxypropylcellulose besteht.

7. Verfahren nach Anspruch 6, wobei die recycelte Zellstofffaser als die Zellstofffaser für ein Kulturmedium verwendet wird und das Verfahren weiter einen Cellulase-Erzeugungsschritt des Erzeugens von Cellulase unter Verwendung der Zellstofffaser für ein Kulturmedium nach dem Bildungsschritt für recycelte Zellstofffaser umfasst.

8. Recycelte Zellstofffaser, die aus einem benutzten Hygieneprodukt stammt, das eine Zellstofffaser enthält, wobei die recycelte Zellstofffaser einen Hemicellulose-Gehalt von weniger als 8,0 Masse-% aufweist und wobei die recycelte Zellstofffaser einen Lignin-Gehalt von weniger als 0,10 Masse-% aufweist,
und wobei die recycelte Zellstofffaser, die aus einem benutzten Hygieneprodukt stammt, das eine Zellstofffaser enthält, gemäß dem Verfahren nach einem der Ansprüche 1 bis 7 erhalten wird.

9. Recycelte Zellstofffaser nach Anspruch 8,
wobei die recycelte Zellstofffaser eine Zellstofffaser für ein Kulturmedium als ein Kulturmedium für einen Cellulase-produzierenden Mikroorganismus ist, und Bakterien in der Zellstofffaser für ein Kulturmedium durch ein Gusskulturverfahren und/oder ein Plattenkulturverfahren, wie in der Beschreibung beschrieben, nicht nachgewiesen werden, und/oder
wobei die recycelte Zellstofffaser die Zellstofffaser für ein Kulturmedium ist und die Zellstofffaser für ein Kulturmedium einen Aschegehalt von 0,65 Masse-% oder weniger enthält.

10. Verwendung der recycelten Zellstofffaser nach Anspruch 8 als ein Rohmaterial für die Herstellung einer Cellulose-Nanofaser, einer Viskosefaser, eines Cellulosederivats, eines Bioethanols, eines Formmaterials oder eines verarbeiteten Papierprodukts,
wobei das Cellulosederivat aus einer Gruppe ausgewählt ist, die aus einer halbsynthetischen Cellulosefaser, Carboxymethylcellulose, Hydroxyethylcellulose und Hydroxypropylcellulose besteht.

11. Kulturmedium für einen Cellulase-produzierenden Mikroorganismus, das eine recycelte Zellstofffaser nach Anspruch 8 oder 9 umfasst.

12. Kulturmedium nach Anspruch 11, wobei Bakterien in der Zellstofffaser für ein Kulturmedium durch ein Gusskulturverfahren und/oder ein Plattenkulturverfahren, wie in der Beschreibung beschrieben, nicht nachgewiesen werden, und/oder wobei die Zellstofffaser für ein Kulturmedium einen Aschegehalt von 0,65 Masse-% oder weniger enthält.

13. Verwendung von Ozon zur Verringerung eines Hemicellulose-Gehalts einer recycelten Zellstofffaser, die aus einem benutzten Hygieneprodukt stammt, das eine Zellstofffaser enthält.

14. Verwendung nach Anspruch 13,
wobei die recycelte Zellstofffaser einen Hemicellulose-Gehalt von weniger als 8,0 Masse-% aufweist.

## Revendications

1. Procédé de production d'une fibre de pâte à papier recyclée à partir d'une fibre de pâte à papier destinée à être traitée, le procédé comprenant :
une étape de formation de fibre de pâte à papier recyclée consistant à former la fibre de pâte à papier recyclée ayant une teneur en hémicellulose inférieure à 8,0 % en masse à partir de la fibre de pâte à papier destinée à être traitée, en introduisant un gaz contenant de l'ozone (53) dans un réservoir de traitement (31) contenant un liquide de traitement (52) contenant une matière contenant de la fibre de pâte à papier (51) contenant la fibre de pâte à papier destinée à être traitée,
dans lequel, dans l'étape de formation de fibre de pâte à papier recyclée, la fibre de pâte à papier recyclée est formée en mettant le gaz contenant de l'ozone (53) en contact avec le matériau contenant de la fibre de pâte à papier (51) de telle sorte qu'une valeur CT, qui est un produit d'une concentration d'ozone et d'un temps de traitement, est de 8 000 à 11 000 ppm• min.

2. Procédé selon la revendication 1,
dans lequel la fibre de pâte à papier recyclée a une teneur en lignine inférieure ou égale à 0,10 % en masse.

3. Procédé selon la revendication 1 ou la revendication 2, comportant par ailleurs :
une étape de mise en oeuvre consistant à mettre en oeuvre la cuve de traitement (31) comprenant un orifice d'alimentation en matériau contenant de la fibre de pâte à papier (32), un orifice de décharge de liquide de traitement (33), et un orifice d'alimentation en gaz contenant de l'ozone (43) se trouvant au niveau d'une position inférieure de la cuve de traitement (31) ;
une étape d'alimentation en matériau contenant de la fibre de pâte à papier consistant à alimenter le matériau contenant de la fibre de pâte à papier (51) dans le réservoir de traitement (31) à partir de l'orifice d'alimentation en matériau contenant de la fibre de pâte à papier (32) ;
une étape d'alimentation en gaz contenant de l'ozone (53) consistant à alimenter le gaz contenant de l'ozone (53) dans le liquide de traitement (52) dans le réservoir de traitement (31) à partir de l'orifice d'alimentation en gaz contenant de l'ozone (43) ;
l'étape de formation de fibre de pâte à papier recyclée consistant à former la fibre de pâte à papier recyclée à partir de la fibre de pâte à papier destinée à être traitée, en mettant le matériau contenant de la fibre de pâte à papier (51) en contact avec le gaz contenant de l'ozone (53) tout en élevant le gaz contenant de l'ozone (53) dans le réservoir de traitement (31) ; et
une étape de décharge de liquide de traitement consistant à décharger le liquide de traitement (52) contenant la fibre de pâte à papier recyclée à partir de l'orifice de décharge de liquide de traitement (33).

4. Procédé selon la revendication 3,
dans lequel le matériau contenant de la fibre de pâte à papier (51) contient la fibre de pâte à papier destinée à être traitée et un polymère super absorbant, qui sont dérivés d'un produit sanitaire usagé,
le matériau contenant de la fibre de pâte à papier (51) dans l'étape d'alimentation en matériau contenant de la fibre de pâte à papier et dans l'étape de formation de fibre de pâte à papier recyclée contient par ailleurs le polymère super absorbant, et au moins une partie du polymère superabsorbant est dissoute dans le liquide de traitement (52) au cours de l'étape de formation de fibre de pâte à papier recyclée, et éventuellement
dans lequel le liquide de traitement (52) est acide, faiblement acide ou neutre.

5. Procédé selon la revendication 4, comportant par ailleurs :
une étape d'inactivation consistant à inactiver le polymère superabsorbant avec un acide avant l'étape d'alimentation en matériau contenant de la fibre de pâte à papier, éventuellement dans lequel l'acide est un acide en mesure de former un complexe avec un ion métallique contenu dans les excréments.

6. Procédé selon l'une quelconque des revendications 1 à 5, comportant par ailleurs :
une étape d'utilisation de cellulose consistant à former une nanofibre de cellulose, une rayonne viscose, un dérivé de la cellulose, un bioéthanol, un matériau de moulage, ou un produit de papier traité à partir de la fibre de pâte à papier recyclée, ou consistant à utiliser la fibre de pâte à papier recyclée comme fibre de pâte à papier pour un milieu de culture comme milieu de culture pour un micro-organisme producteur de cellulase, et éventuellement dans lequel la fibre de pâte à papier recyclée est utilisée comme fibre de pâte à papier pour un milieu de culture, et les bactéries ne sont pas détectées dans la fibre de pâte à papier pour un milieu de culture par un procédé de culture par écoulement et/ou par un procédé de culture sur plaque, tel qu'il est décrit dans la description,
dans lequel le dérivé de cellulose est sélectionné dans un groupe constitué par une fibre de cellulose semi-synthétique, de la carboxyméthylcellulose, de l'hydroxyéthylcellulose et de l'hydroxypropylcellulose.

7. Procédé selon la revendication 6, dans lequel la fibre de pâte à papier recyclée est utilisée comme fibre de pâte à papier pour un milieu de culture, et le procédé comporte par ailleurs une étape de génération de cellulase consistant à générer de la cellulase en utilisant la fibre de pâte à papier pour un milieu de culture après l'étape de formation de fibre de pâte à papier recyclée.

8. Fibre de pâte à papier recyclée dérivée d'un produit sanitaire usagé contenant de la fibre de pâte à papier,
dans laquelle la fibre de pâte à papier recyclée a une teneur en hémicellulose inférieure à 8,0 % en masse, et
dans laquelle la fibre de pâte à papier recyclée a une teneur en lignine inférieure à 0,10 % en masse,
et dans laquelle la fibre de pâte à papier recyclée dérivée d'un produit sanitaire usagé contenant de la fibre de pâte à papier est obtenue selon le procédé selon l'une quelconque des revendications 1 à 7.

9. Fibre de pâte à papier recyclée selon la revendication 8, dans laquelle la fibre de pâte à papier recyclée est une fibre de pâte à papier pour un milieu de culture comme milieu de culture pour un micro-organisme producteur de cellulase, et les bactéries ne sont pas détectées dans la fibre de pâte à papier pour un milieu de culture par un procédé de culture par écoulement et/ou par un procédé de culture sur plaque, tel qu'il est décrit dans la description, et/ou
dans laquelle la fibre de pâte à papier recyclée est la fibre de pâte à papier pour un milieu de culture, et la fibre de pâte à papier pour un milieu de culture contient une teneur en cendres inférieure ou égale à 0,65 % en masse.

10. Utilisation de la fibre de pâte à papier recyclée selon la revendication 8 comme matière première pour la production d'une nanofibre de cellulose, d'une rayonne viscose, d'un dérivé de cellulose, d'un bioéthanol, d'un matériau de moulage, ou d'un produit en papier transformé,
dans laquelle le dérivé de cellulose est sélectionné dans un groupe constitué par une fibre de cellulose semi-synthétique, de la carboxyméthylcellulose, de l'hydroxyéthylcellulose et de l'hydroxypropylcellulose.

11. Milieu de culture pour micro-organisme producteur de cellulase, comprenant de la fibre de pâte à papier recyclée selon la revendication 8 ou la revendication 9.

12. Milieu de culture selon la revendication 11, dans lequel les bactéries ne sont pas détectées dans la fibre de pâte à papier pour un milieu de culture par un procédé de culture par écoulement et/ou par un procédé de culture sur plaque, tel qu'il est décrit dans la description, et/ou
dans lequel la fibre de pâte à papier pour un milieu de culture contient une teneur en cendres inférieure ou égale à 0,65 % en masse.

13. Utilisation d'ozone pour réduire la teneur en hémicellulose d'une fibre de pâte à papier recyclée dérivée d'un produit sanitaire usagé contenant de la fibre de pâte à papier.

14. Utilisation selon la revendication 13,
dans laquelle la fibre de pâte à papier recyclée a une teneur en hémicellulose inférieure à 8,0 % en masse.
